(19) Europäisches Patentamt / European Patent Office / Office européen des brevets

(11) **EP 1 544 512 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
*F16H 61/04* (2006.01)     *F16H 59/72* (2006.01)
*B60W 10/02* (2006.01)     *B60W 10/06* (2006.01)
*B60W 10/10* (2006.01)

(21) Anmeldenummer: **05005213.3**

(22) Anmeldetag: **21.12.2001**

(54) **Kraftfahrzeug mit einem eine Mehrfach-Kupplungseinrichtung aufweisenden Antriebsstrang**

Vehicle with a drivetrain having a multiple clutch device

Véhicule avec une chaîne de traction ayant un dispositif à embrayages multiples

(84) Benannte Vertragsstaaten:
**AT BE CH CY DE DK ES FI FR GB GR IE IT LI LU MC NL PT SE TR**

(30) Priorität: **12.01.2001 DE 10101176**
                    **01.10.2001 DE 10148424**

(43) Veröffentlichungstag der Anmeldung:
**22.06.2005 Patentblatt 2005/25**

(62) Dokumentnummer(n) der früheren Anmeldung(en) nach Art. 76 EPÜ:
**01985921.4 / 1 350 044**

(73) Patentinhaber:
• **ZF Sachs AG**
  **97424 Schweinfurt (DE)**
• **Volkswagen AG**
  **38436 Wolfsburg (DE)**

(72) Erfinder:
• **Kuhstrebe, Jochen**
  **97318 Westheim (DE)**
• **Moseler, Olaf**
  **97070 Würzburg (DE)**
• **Rohm, Axel**
  **97453 Schonungen (DE)**
• **Steiner, Eduard**
  **97070 Würzburg (DE)**
• **Reuthal, Rainer**
  **97294 Unterpleichfeld (DE)**
• **Schneider, Hans-Jürgen**
  **97440 Werneck-Stettbach (DE)**
• **Kundermann, Wolfgang**
  **97422 Schweinfurt (DE)**
• **Sudau, Jörg**
  **97464 Niederwerrn (DE)**
• **John, Thomas**
  **97529 Alitzheim (DE)**
• **Strasser, Thomas**
  **97422 Schweinfurt (DE)**

(56) Entgegenhaltungen:
DE-A- 19 631 983         DE-C1- 19 939 819
FR-A- 2 790 297          US-A- 5 181 431
US-A- 5 407 401          US-A- 5 503 039
US-A- 5 711 409          US-A- 5 890 392

• **PATENT ABSTRACTS OF JAPAN Bd. 1997, Nr. 09, 30. September 1997 (1997-09-30) & JP 09 133207 A (JATCO CORP), 20. Mai 1997 (1997-05-20)**

## Beschreibung

## [Technisches Gebiet]

Die Erfindung betrifft nach mehreren Hauptaspekten allgemein eine sogenannte Mehrfach-Kupplungseinrichtung, ggf. Doppel-Kupplungseinrichtung, für die Anordnung in einem Kraftfahrzeug-Antriebsstrang zwischen einer Antriebseinheit und einem Getriebe, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung zur Momentübertragung zwischen der Antriebseinheit und dem Getriebe aufweist, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit (insbesondere für einen nasslaufenden Betrieb) zuführbar ist. Es wird in diesem Zusammenhang insbesondere (aber nicht ausschließlich) an eine solche Kupplungseinrichtung gedacht, bei der die Lamellen-Kupplungsanordnungen auf hydraulischem Wege vermittels in die Kupplungseinrichtung integrierten hydraulischen Nehmerzylindern betätigbar sind.

## [Stand der Technik]

Derartige Kupplungseinrichtungen wurden in verschiedenen Patentanmeldungen der Anmelderin vorgeschlagen, es wird beispielsweise auf die nicht vorveröffentlichte DE 100 04 179 A1 verwiesen.

Das Dokument DE-199 39 819 C offenbart ein Kraftfahrzeug gemäß dem Oberbegriff der Ansprüche 1, 5 und 11. Das Dokument US-5 407 401 offenbart ein Kraftfahrzeug gemäß dem Oberbegriff des Anspruchs 9.

Die Erfindung betrifft nach diesem Hauptaspekt ferner einen Antriebsstrang, der eine Antriebseinheit und ein Getriebe (ggf. Lastschaltgetriebe) mit einer ersten Getriebeeingangswelle und einer zweiten Getriebeeingangswelle sowie eine Kupplungseinrichtung der genannten Art aufweist, sowie ein einen derartigen Antriebsstrang umfassendes Kraftfahrzeug. Es wird in diesem Zusammenhang insbesondere daran gedacht, dass dem vorzugsweise als Lastschaltgetriebe ausgeführten Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind.

Um einen Verschleiß bzw. ein Verbrennen der Lamellen (insbesondere Belaglamellen) zu verhindern, ist die Schmierung/Kühlung der Lamellen durch eine Betriebsflüssigkeit (insbesondere Kühlöl) erforderlich. Regelmäßig für derartige Anwendungen eingesetzte Öle weisen bei Betriebstemperatur (ca. 90°C) eine niedrige Zähigkeit (niedrige Viskosität) auf, so dass bei geöffneten Kupplungsanordnungen (druckloser hydraulischer Betätigungszylinder im Falle einer hydraulisch betätigbaren Kupplungsanordnung des NORMALERWEISE-OFFEN-Typs) die Schleppmomente, die durch das zwischen den Lamellen befindliche Öl hervorgerufen werden, vergleichsweise gering sind (beispielsweise kleiner als 2 Nm). Ist jedoch die Öltemperatur sehr niedrig (etwa deutlich kleiner als 0°C), wie dies beispielsweise infolge eines nächtlichen Abstellens des Kraftfahrzeugs im Winter auftreten kann, resultiert eine drastisch erhöhte Zähigkeit (Viskosität) des Öls, und es können dann sehr hohe Schleppmomente auftreten (bis zu Werten größer als 25 Nm). Zusätzlich zu den Schleppmomenten können Losbrech- oder Loslösmomente von bis zu über 50 Nm aufgrund von aneinander anhaftenden (aneinander klebenden) Lamellen auftreten, die zu Beginn des Fahrbetriebs aber nur einmal aufzubringen wären, um die aneinander anhaftenden (aneinander klebenden) Lamellen voneinander zu lösen. Nach diesem Lösen der Lamellen treten dann aber immer noch die Schleppmomente auf, bis die Zähigkeit (Viskosität) des Öls durch die Erwärmung des Motors und das Einbringen von Wärme (Reibenergie) in die Kupplungsanordnungen sinkt.

Als Folge dieser hohen Schlepp- bzw. Aneinanderhaftmomente kann das Einlegen eines Ganges praktisch unmöglich werden, da die Synchronisierungseinrichtungen des Getriebes in der Regel nicht für die Überwindung derartig hoher Momente ausgelegt sind. Typisch sind die Synchronisierungseinrichtungen für Momente in der Größenordnung 5 Nm ausgelegt. Können keine Gänge eingelegt bzw. kann nicht geschaltet werden, so ist ein Fahrbetrieb mit dem Fahrzeug nicht möglich.

In den nicht vorveröffentlichten deutschen Patentanmeldungen 101 28 856.5 (AT 15.06.2001; Titel: "Kupplungssystem mit wenigstens einer Lamellen-Kupplungsanordnung, Antriebsstrang mit dem Kupplungssystem und Warmlaufverfahren hierfür") und 101 18 756.4 (AT 17.04.2001; Titel: "Kupplungssystem") wurden verschiedene Vorschläge gemacht, die die vorstehend geschilderten Probleme zumindest lindern können.

## [Darstellung der Erfindung]

Auch die vorliegende Erfindung zielt darauf, die vorstehend angesprochenen Probleme zu lösen oder zumindest zu mildern, insbesondere besser beherrschbar zu machen.

Nach einem ersten Hauptaspekt der Erfindung wird für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, wobei das Getriebe den Getriebegängen zugeordnete Schaltelemente und diesen zugeordnete oder zugehörige Synchronelemente aufweist, wobei zum Einlegen eines Gangs (im Folgenden als Zielgang bezeichnet) wenigstens ein dem Zielgang zugeordnetes Synchronelement vermittels der Aktuator-Anordnung aktivierbar ist, um wenigstens eine dem Zielgang zugeordnete Getriebewelle, insbesondere die dem Zielgang zugeordnete Getriebeeingangswelle, zu synchronisieren, vorgeschlagen, dass zum Einlegen des Zielgangs zusätzlich wenigstens ein wenigstens einem anderen Gang zugeordnetes Synchronelement vermittels der Aktuator-Anordnung aktivierbar ist, die dem Zielgang zugeordnete Getriebewelle zu synchronisieren.

Gleichzeitig hierzu kann die Aktuator-Anordnung beispielsweise mehrere unabhängig voneinander betätigbare Aktuatoren aufweisen. Dem Erfindungsvorschlag liegt die Überlegung zugrunde, die im Hinblick auf das Losbrechmoment oder/und die Schleppmomente nötigen (gegenüber einem Normalbetrieb erhöhten) Synchronkräfte mit mehreren Synchroneinheiten oder Elementen aufzubringen. Dabei können einem Aktuator beispielsweise ein oder mehrere Schaltgabeln zugeordnet sein. Will man z.B. den 1. Gang einlegen, so können zum Abbremsen bzw. Beschleunigen der Getriebeeingangswelle sämtliche auf dieser Welle angeordnete Synchroneinheiten genutzt werden, sofern sie gleichzeitig betätigt werden können. Im Falle eines Lastschaltgetriebes könnten also beispielsweise die Synchronisiereinheiten des 1., 3. und 5. Ganges zum Abbremsen der diesen Gängen zugeordneten Getriebeeingangswelle verwendet werden. Es sollte jedoch sichergestellt werden, dass bei einer sich verlangsamenden Getriebeeingangswelle (allgemein: bei einer sich einem Synchronpunkt nähernden Getriebeeingangswelle) nicht plötzlich zwei oder mehr Gänge eingelegt werden. Hierzu wird vorgeschlagen, dass eine entsprechende Sicherheitsfunktionalität vorgesehen ist, die ein unbeabsichtigtes Einlegen des anderen Ganges verhindert. Die Sicherheitsfunktionalität sorgt beispielsweise dafür, dass die Synchronisiereinheiten/Schaltmuffen des 3. und 5. Ganges nur einen begrenzten Weg zurücklegen, der es zwar ermöglicht, die Getriebeeingangswelle abzubremsen, aber nicht den betreffenden Gang einzulegen.

Vorteilhaft in diesem Zusammenhang kann insbesondere die Überwachung der Drehzahl der Wellen sein. Anhand der Fahrzeuggeschwindigkeit, die beispielsweise aus einem Getriebeausgangsdrehzahlsensor oder aus den Raddrehzahlen (mit einer gewissen Unsicherheit aufgrund von Antriebsstrangschwingungen und Auflösungsvermögen der Raddrehzahlsensoren bei niedriger Fahrzeuggeschwindigkeit) bestimmt werden kann und der mit einem Drehzahlsensor gemessenen Drehzahl der Getriebeeingangswelle, die abgebremst bzw. beschleunigt werden soll, könnte die Annäherung an einen Synchronpunkt erkannt werden, so dass dann die Aktuatorik des "anderen Gangs" (der zwar zum Abbremsen der Welle verwendet wird, aber nicht eingelegt werden soll) so angesteuert wird, dass diese kurz vor dem Synchronpunkt die Betätigungskraft reduziert, so dass ein Einlegen dieses Ganges verhindert wird. Allgemeiner wird vorgeschlagen, dass die Steuereinrichtung dafür ausgelegt ist, auf Grundlage von erfassten Drehzahlen eine Annäherung an einen dem anderen Gang zugeordneten Synchronpunkt zu erkennen und vor Erreichen des Synchronpunktes auf wenigstens ein dem anderen Gang zugeordnetes Schaltelement oder/und Synchronelement wirkende Aktivierungskräfte aufzuheben oder zu reduzieren, um ein Einlegen des anderen Gangs zu verhindern.

Häufig wird es vorteilhaft sein, wenn die Steuereinrichtung dafür ausgelegt ist, dass die Steuereinrichtung dafür ausgelegt ist, vermittels der Aktuator-Anordnung das wenigstens eine dem wenigstens einen anderen Gang zugeordnete Synchronelement bedarfsweise dann zu aktivieren, wenn wenigstens eine Positiv-Bedingung erfüllt oder/und wenigstens eine Negativ-Bedingung nicht erfüllt ist. Insbesondere kann vorgesehen sein, dass bei normalen Temperaturen bzw. normaler Viskosität der Betriebsflüssigkeit kein wenigstens einem anderen Gang zugeordnetes Synchronelement aktiviert wird.

Für bei den vorstehend angesprochenen, sich auf die Beherrschung der eingangs angesprochenen Probleme beziehenden Aspekte der Erfindung erscheint es aus Sicherheitsgründen vorteilhaft, wenn ein Starten der Antriebseinheit in Abhängigkeit von einer Betätigung und Nicht-Betätigung eines Fahrzeug-Bremssystems oder/und von dem Bedienzustand einer manuell bedienbaren Wähleinrichtung zum Wählen verschiedener Fahrzeug- oder/und Getriebemodi oder/und von einem momentan geltenden Fahrzeug- oder/und Getriebemodus sperrbar und freigebbar ist.

Als weitere Möglichkeit wird nach einem weiteren Hauaspekt der Erfindung für ein Kraftfahrzeug, umfassend einen Antriebsstrang, der aufweist: eine Antriebseinheit, ein Lastschaltgetriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, wobei die Steuereinrichtung ferner eine der Kupplungseinrichtung zugeordnete oder zugehörige, vorzugsweise hydraulische Betätigungseinrichtung ansteuert, um die Kupplungsanordnungen im Einrück- und Ausrücksinne zu betätigen, wobei die Steuereinrichtung dafür ausgelegt ist, in einem Lastschaltmodus in einem Getriebezustand, in dem ein der einen Getriebeeingangswelle zugeordneter Ausgangsgang und ein der anderen Getriebeeingangswelle zugeordneter Zielgang eingelegt sind, die Kupplungsanordnungen vermittels der Betätigungseinrichtung gegenläufig zu betätigen, um ein Antriebsmoment der Antriebseinheit von der einen zur anderen Getriebeeingangswelle kontinuierlich und ohne Zugkraftunterbrechung zu verlagern und so den Ausgangsgang als momentenübertragender Gang zu deaktivieren und den Zielgang als momentenübertragender Gang zu aktivieren, vorgeschlagen, dass ein Aktiv-Synchronisierungsmodus vorgesehen ist, in dem zur Deaktivierung des Ausgangsgangs als momentenübertragender Gang und Aktivierung des Zielgang als momentenübertragender Gangs zuerst der Ausgangsgang ausgelegt wird oder/und die dem Ausgangsgang zugeordnete Kupplungsanordnung geöffnet wird, dann die Drehzahl der Antriebseinheit und die Drehzahl der dem Zielgang zugeordneten Getriebeeingangswelle auf das Synchronverhältnis des Zielgangs gebracht wird und dann der Zielgang eingelegt wird.

Man kann in diesem Zusammenhang vorsehen, dass im Aktiv-Synchronisierungsmodus die Drehzahl der Antriebseinheit und die Drehzahl der dem Zielgang zugeordneten Getriebeeingangswelle dadurch gemeinsam auf das Synchronverhältnis des Zielgangs gebracht werden, dass beim Bringen der Drehzahl der Antriebseinheit auf das Synchronverhältnis die dem Zielgang zugeordnete Kupplungsanordnung zumindest teilweise eingerückt ist. Eine andere Möglichkeit ist, dass das im Aktiv-Synchronisierungsmodus nach Bringen der Drehzahl der Antriebseinheit auf das Synchronverhältnis die Drehzahl der dem Zielgang zugeordneten Getriebeeingangswelle auf das Synchronverhältnis durch zumindest teilweises Einrücken der dem Zielgang zugeordnete Kupplungsanordnung gebracht wird.

Die vorstehenden Vorschläge ermöglichen ein Schalten der Gänge bei Tieftemperaturen unter größtmöglicher Schonung bzw. Entlastung der Synchronisiereinrichtungen durch aktive Synchronisierung vermittels der Kupplungseinrichtung. Man kann vom "Prinzip des aktiven Synchronisierens" sprechen. Durch das erfindungsgemäße aktive Synchronisieren ist im Falle eines Lastschaltgetriebes zwar kein zugkraftunterbrechungsfreies Schalten mehr gegeben, dies wird aber in der Regel in der Aufwärmphase der Betriebsflüssigkeit (des Kühlöls) akzeptiert werden.

Nach dem Erfindungsvorschlag wird beim Schalten von einem Gang (dem Ausgangsgang) zum anderen Gang (dem Zielgang) zuerst der Ausgangsgang ausgelegt, so dass im Antriebsstrang kein Formschluss mehr gegeben ist. Grundsätzlich ist es auch denkbar, den Ausgangsgang eingelegt zu lassen und nur die dem Ausgangsgang zugeordnete Kupplungsanordnung zu öffnen. Danach wird dann die Drehzahl der Antriebseinheit (des Motors) auf das Synchronverhältnis des neuen Gangs gebracht. Jetzt kann (muss aber nicht) die dem Zielgang zugeordnete Kupplungsanordnung geöffnet werden und der Zielgang eingelegt werden, ohne dass hierbei die Synchronisierung der betreffenden Getriebewelle durch die Synchronisiereinrichtung des Zielgangs belastet (überlastet) wird. Durch die unter Umständen noch hohen Schleppmomente kann die Kupplungsanordnung auch im geöffneten Zustand ein Verhalten aufweisen, das mehr dem Verhalten einer geschlossenen Kupplungsanordnung entspricht. Eine geöffnete Kupplungsanordnung erhöht jedoch den Schaltkomfort, so dass es bevorzugt ist, die Kupplungsanordnung des Zielgangs vor dem Einlegen des Zielgangs zu öffnen.

Betreffend die Drehzahlanpassung der Antriebseinheit an das Synchronverhältnis des Zielgangs ist es hingegen bevorzugt, dass diese Drehzahlanpassung im eingerückten Zustand der dem Zielgang zugeordneten Kupplungsanordnung erfolgt, so dass mit der Anpassung des Motors zugleich die Drehzahlanpassung der dem Zielgang zugeordneten Getriebeeingangswelle erreicht wird. Zumindest annähernde Drehzahlgleichheit zwischen der Antriebseinheit und der dem Zielgang zugeordneten Getriebeeingangswelle sollten idealerweise sichergestellt werden.

Weiterbildend wird vorgeschlagen, dass der Aktiv-Synchronisierungsmodus betreffend ein Hochschalten nur dann freigegeben wird, wenn eine momentane Fahrzeuggeschwindigkeit bezogen auf den Zielgang einer Mindest-Leerlaufdrehzahl der Antriebseinheit entspricht oder diese übersteigt. Nach diesem Weiterbildungsvorschlag kann die aktive Synchronisierung dann zum Einsatz kommen, wenn sich das Fahrzeug mit ausreichender Geschwindigkeit bewegt. Ausreichende Geschwindigkeit bedeutet dabei, dass die auf die Getriebeeingangswelle bezogene Fahrzeuggeschwindigkeit im gewünschten Zielgang größer als die kleinstmögliche Laufdrehzahl des Motors ist.

Es ist aber nicht zwingend, dass bei tiefen Temperaturen bzw. hoher Viskosität der Betriebsflüssigkeit auf ein zugkraftunterbrechungsfreies Schalten verzichtet werden muss.

Nach einem anderen Hauptaspekt der Erfindung wird für ein Kraftfahrzeug, umfassend einen Antriebsstrang, der aufweist: eine Antriebseinheit, ein Lastschaltgetriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung und eine die Aktuator-Anordnung ansteuernde Steuereinrichtung zugeordnet ist, unter deren Vermittlung der ersten und der zweiten Getriebeeingangswelle zugeordnete Getriebegänge ein- und auslegbar sind, wobei die Steuereinrichtung ferner eine der Kupplungseinrichtung zugeordnete oder zugehörige, vorzugsweise hydraulische Betätigungseinrichtung ansteuert, um die Kupplungsanordnungen im Einrück- und Ausrücksinne zu betätigen, wobei die Steuereinrichtung dafür ausgelegt ist, in einem Lastschaltmodus in einem Getriebezustand, in dem ein der einen Getriebeeingangswelle zugeordneter Ausgangsgang und ein der anderen Getriebeeingangswelle zugeordneter Zielgang eingelegt sind, die Kupplungsanordnungen vermittels der Betätigungseinrichtung gegenläufig zu betätigen, um ein Antriebsmoment der Antriebseinheit von der einen zur anderen Getriebeeingangswelle kontinuierlich und ohne Zugkraftunterbrechung zu verlagern und so den Ausgangsgang als momentenübertragender Gang zu deaktivieren und den Zielgang als momentenübertragender Gang zu aktivieren, betreffend ein Rückschalten vorgeschlagen, dass die Steuereinrichtung dafür ausgelegt ist, beim Wechsel von einem höheren Ausgangsgang zu einem niedrigeren Zielgang (Rückschaltung) in Vorbereitung eines Einlegens des Zielgangs auf die Antriebseinheit einzuwirken, dass deren Antriebsmoment über ein von der dem Ausgangsgang zugeordneten Kupplungsanordnung übertragbares Moment ansteigt, so dass die Drehzahl der Antriebseinheit über die momentane Drehzahl der dem Ausgangsgang zugeordneten Getriebeeingangswelle ansteigt und sich einer von der momentanen Fahrzeuggeschwindigkeit abhängigen Synchrondrehzahl für den Zielgang zumindest annähert und diese vorzugsweise zumindest näherungsweise erreicht wobei die Steuereinrichtung dafür ausgelegt ist, im Zuge mit der Vergrößerung des Antriebsmoments bzw. der Beschleunigung der dem Zielgang zugeordnete Getriebeeingangswelle oder danach die Aktuator-Anordnung derart anzusteuern, dass diese zur Vorbereitung der gegenläufigen Betätigung der Kupplungsanordnungen im Sinne eines Einlegens des Zielgangs auf das Getriebe wirkt. Betreffend ein Hochschalten ist die Steuereinrichtung gemäß einem weiteren Hauptaspekt dafür ausgelegt, beim Wechsel von einem niedrigeren Ausgangsgang zu einem höheren Zielgang (Hochschaltung) in Vorbereitung eines Einlegens des Zielgangs die dem Zielgang zugeordnete Kupplungsanordnung ausgehend von einem ausgerückten Zustand soweit im Einrücksinn zu betätigen, dass die dem Zielgang zugeordnete, bisher sich durch Einwirkung von Getriebeschleppmomenten oder/und Abbremsmomenten höchstens mit einer gegenüber der Synchrondrehzahl für den Zielgang geringeren Drehzahl drehende Getriebeeingangswelle in Richtung einer Annäherung an die Synchrondrehzahl beschleunigt wird und diese vorzugsweise zumindest näherungsweise erreicht wobei eine/die Steuereinrichtung eine effektive Temperatur der Betriebsflüssigkeit, die durch eine Sensoranordnung erfasst wird oder/und durch die Steuereinrichtung bestimmt wird, auswertet, und in Abhängigkeit von dieser Auswertung einen normalen Schalt- und Kupplungsbetrieb mit freier Gangwahl oder/und Schalten ohne Zugkraftunterbrechung freigibt und sperrt.

Zur Vorbereitung des Rückschaltens kann nach dem Erfindungsvorschlag beispielsweise durch einen Eingriff in das Management der Antriebseinheit, insbesondere in das Motormanagement, das Antriebsmoment (Motormoment) über das Kupplungsmoment der momentan Momenten übertragenden Kupplungsanordnung erhöht werden, so dass die Drehzahl der Antriebseinheit (Motordrehzahl) über die betreffende Getriebeeingangswellendrehzahl steigt. Auf diese Weise kann die Drehzahl der Antriebseinheit auf die neue Synchrondrehzahl gebracht werden oder dieser zumindest angenähert werden. Gleichzeitig mit der Erhöhung der Drehzahl der Antriebseinheit oder erst anschließend kann dann die dem Zielgang zugeordnete Kupplungsanordnung geschlossen werden, um die Getriebeeingangswellendrehzahl der dem Zielgang zugeordneten Getriebeeingangswelle ebenfalls auf die neue Synchrondrehzahl zu bringen, die durch die aktuelle Fahrgeschwindigkeit und den Zielgang bestimmt ist. Damit kann nun der neue Gang (Zielgang) eingelegt werden, ohne dass nennenswerte Reibarbeit in der Synchroneinrichtung des Getriebes geleistet werden muss. Es reicht aus, dass die dem Zielgang zugeordnete Kupplungsanordnung während des "Hochschleppens" der Getriebeeingangswelle nur soweit geschlossen wird, dass die Schleppmomente bzw. das Kupplungsmoment ausreichen, um die Getriebeeingangswelle mitzunehmen. Der beschriebene Schaltablauf ermöglicht ein zugkraftunterbrechungsfreies Rückschalten selbst bei Tieftemperaturen.

Wie bereits angesprochen wurde, kann die Steuereinrichtung vorteilhaft dafür ausgelegt sein, gleichzeitig mit der Vergrößerung des Antriebsmoments oder danach die dem Zielgang zugeordnete Kupplungsanordnung im Einrücksinne zu betätigen, um die dem Zielgang zugeordnete Getriebeeingangswelle in Richtung einer Annäherung an die Synchrondrehzahl zu beschleunigen und vorzugsweise zumindest näherungsweise auf die Synchrondrehzahl zu bringen.

Betreffend ein Hochschalten ist darauf hinzuweisen, dass beim Hochschalten das "neue" Getriebeeingangswellen-Synchrondrehzahlniveau, also die Synchrondrehzahl des Zielgangs, unter dem des Ausgangsgangs liegt. Ist die dem Zielgang zugeordnete Kupplungsanordnung geöffnet und sind die Schleppmomente des Getriebes so groß, dass die Drehzahl der dem Zielgang zugeordneten Getriebeeingangswelle zwischen 0 und der neuen Synchrondrehzahl liegt, kann durch Schließen der dem Zielgang zugeordneten Kupplungsanordnung die diesem Gang zugeordnete Getriebeeingangswelle auf die neue Synchrondrehzahl gebracht werden, um ein Gangeinlegen zu ermöglichen bzw. zu erleichtern. Diese Art der Schaltung erlaubt selbst bei Tieftemperaturen ein zugkraftunterbrechungsfreies Hochschalten. Hierzu wird speziell vorgeschlagen, dass die Steuereinrichtung dafür ausgelegt ist, im Zuge mit der Beschleunigung der dem Zielgang zugeordnete Getriebeeingangswelle oder danach die Aktuator-Anordnung derart anzusteuern, dass diese zur Vorbereitung der gegenläufigen Betätigung der Kupplungsanordnungen im Sinne eines Einlegens des Zielgangs auf das Getriebe wirkt.

Erreicht die Temperatur der Betriebsflüssigkeit, insbesondere des Kühlöls, durch Aufwärmmaßnahmen, durch das Aufwärmen der als Brennkraftmaschine ausgeführten Antriebseinheit oder durch den Fahrbetrieb eine hinreichende Temperatur, sind also die durch die Viskosität der Betriebsflüssigkeit bei niedrigen Temperaturen bedingten Schleppmomente hinreichend niedrig, kann ein normaler Schalt- und Kupplungsbetrieb mit freier Gangwahl freigegeben werden, beispielsweise durch ein Steuerprogramm. Besonders zweckmäßig erscheint eine Ausbildung der Steuereinrichtung derart, dass diese den normalen Schalt- und Kupplungsbetrieb dann freigibt, wenn die effektive Temperatur einen Schwellenwert übersteigt oder eine aus der effektiven Temperatur bestimmte Viskosität der Betriebsflüssigkeit unter einen Schwellenwert gefallen ist.

Soweit wenigstens ein Temperatursensor bzw. eine Sensoranordnung zur Erfassung der Temperatur der Betriebsflüssigkeit vorhanden ist, wird der Sensor bzw. wird die Sensoranordnung vorzugsweise dazu verwendet, die Temperatur der Betriebsflüssigkeit direkt zu messen. Für den Fall, dass kein derartiger Sensor zur Verfügung steht, oder ergänzend (beispielsweise für eine größere Sicherheit, insbesondere Redundanz) wird vorgeschlagen, dass die Steuereinrichtung dafür ausgelegt ist, aus wenigstens einem mittels einer Sensoranordnung bestimmten Temperaturwert, der nicht direkt die effektive Temperatur der Betriebsflüssigkeit angibt, oder/und aus wenigstens einem Betriebsparameter des Antriebsstrangs die effektive Temperatur der Betriebsflüssigkeit zu bestimmen, wobei gegebenenfalls mehrere zu verschiedenen Zeiten protokollierte Temperaturwerte bzw. Betriebsparameter oder/und ein beispielsweise mathematisch oder/und durch Kennfelder definiertes Temperaturmodell der Bestimmung zugrundegelegt werden.

Ein mathematisches Temperaturmodell zur Temperaturbestimmung kann beispielsweise auf der Tatsache basieren, dass die Öltemperatur eine Funktion von Außentemperatur, Motortemperatur, Ölmenge und der in die Kupplungsanordnungen eingebrachten Reibenergie ist. Die Reibenergie berechnet sich wie folgt:

$$W_{Reib}(t) \sim \int \ddot{A}n(t) \cdot M_{Kupplung}(t)dt.$$

Dabei bezeichnet Än die Schlupfdrehzahl einer Kupplungsanordnung, also die Differenz zwischen der Kupplungseingangsdrehzahl und der Kupplungsausgangsdrehzahl der betreffenden Kupplungsanordnung und $M_{Kupplung}$ ist das durch die Kupplungsanordnung übertragene Moment. Bei der kurz als Doppelkupplung bezeichenbaren Doppel-Kupplungseinrichtung addieren sich die Reibenergien der beiden Kupplungsanordnungen.

Der Einfluss der Außentemperatur und der Motortemperatur sowie weiterer Einflussgrößen ist in der Regel sehr stark abhängig von der Konstruktion der Kupplungseinrichtung, des Getriebes und des Motors sowie der verwendeten Materialien, des Einbauraums usw. Es kann deshalb kein allgemeines, fahrzeugunabhängiges Modell angegeben werden, sondern es muss für jedes Fahrzeug ein entsprechendes Modell aufgestellt werden.

Im normalen Fahrbetrieb ohne starke Beschleunigung oder ohne Anfahren mit großer Last (z.B. Anfahren mit einem Hänger) erwärmt sich die Betriebsflüssigkeit (das Kühlöl) in der Regel nur relativ langsam. Dies bedeutet, dass sich auch die in den Kupplungsanordnungen auftretenden Schleppmomente nur vergleichsweise langsam verringern. Es ist deshalb vorstellbar, dass die Schleppmomente erst nach zwei bis drei Minuten Fahrt Werte erreichen, die ein normales Synchronisieren ohne Überlastung oder Schädigung der Synchroneinrichtungen zulassen. Vorteilhaft zur Reduzierung der Aufwärmperiode ist auf jeden Fall, die Menge an Betriebsflüssigkeit (Kühlölmenge) so klein wie unbedingt erforderlich zu halten. Zu bedenken ist ferner, dass das auftretende Schleppmoment stark von der momentan zugeführten Betriebsflüssigkeitsmenge (Kühlölmenge) ansteigt. Dies spricht dafür, nur geringe Betriebsflüssigkeitsmengen zuzuführen. Andererseits muss für die erforderliche Kühlung gesorgt werden. Man wird einen Kompromiss zwischen notwendiger Kühlung und möglichst kleinen Schleppmomenten suchen und finden.

Eine Möglichkeit zur Verkürzung der Aufheizdauer besteht in der gezielten Erwärmung durch Einbringen von Verlustleistung in die Kupplungseinrichtung, z.B. durch gleichzeitiges Betätigen beider Kupplungsanordnungen, so dass ein Teil der Leistung der Antriebseinheit (Motorleistung) in der Kupplungseinrichtung in Wärme umgesetzt wird.

Im Folgenden wird die Erfindung anhand von Ausführungsbeispielen näher erläutert, die einerseits verschiedene Erfindungsvorschläge nach den verschiedenen Aspekten der Erfindung unmittelbar beispielhaft ausführen bzw. bei denen die verschiedenen Erfindungsvorschläge nach den verschiedenen Aspekten der Erfindung vom Fachmann ohne weiteres durch routinemäßige Anwendung seiner Fachkenntnisse umgesetzt werden können (beispielsweise durch entsprechende Programmierung einer einem Getriebe oder/und einer Kupplungseinrichtung oder/und einer Antriebseinheit des Antriebsstrangs zugeordneten elektrischen Steuereinheit auf Mikroprozessorbasis), ohne dass es noch erfinderischer Tätigkeit bedarf.

Fig. 1     zeigt in Teilfig. 1 a in einer schematischen, beispielhaften Darstellung eine Grundstruktur eines erfindungsgemäßen Kupplungssystems mit einer nasslaufenden Doppelkupplung und in Teilfig. 1 b in einer schematischen Darstellung einen erfindungsgemäßen Kraftfahrzeug-Antriebsstrang samt zugeordneter, die Antriebseinheit, die Doppelkupplung und ein Lastschaltgetriebe ansteuernder Steuereinrichtung und zugehörigen Betätigungseinrichtungen.

Fig. 2     zeigt ein erstes Ausführungsbeispiel eines erfindungsgemäßen Kupplungssystems.

Fig. 3     zeigt das Kupplungssystem der Fig. 2 in Kombination mit einem zugeordneten Getriebe.

Fig. 4     zeigt eine Ausgestaltungsmöglichkeit für einen Kühlölkreislauf des Getriebes der Fig. 3.

Fig. 5     zeigt in der Teilfig. 5a) ein Diagramm, das eine typische Abhängigkeit des in einer Lamellen-Kupplungsanordnung auftretenden Schleppmoments bei tiefen Temperaturen als Funktion der Differenzdrehzahl angibt, und in der Teilfig. 5b) ein entsprechendes Diagramm, das einen typischen Verlauf des Schleppmoments bei sehr kleinen Differenzdrehzahlen samt dem Losbrechmoment im Falle von zusammenklebenden Lamellen angibt.

Fig. 6     zeigt exemplarisch eine typische Getriebe-Synchronisiereinrichtung des Stands der Technik.

Fig. 7     zeigt schematisch ein automatisiertes Doppelkupplungsgetriebe samt vorgeschalteter Doppelkupplung.

Fig. 8     zeigt ein Beispiel für einen erfindungsgemäßen Schaltablauf für eine Zug-Rück-Schaltung.

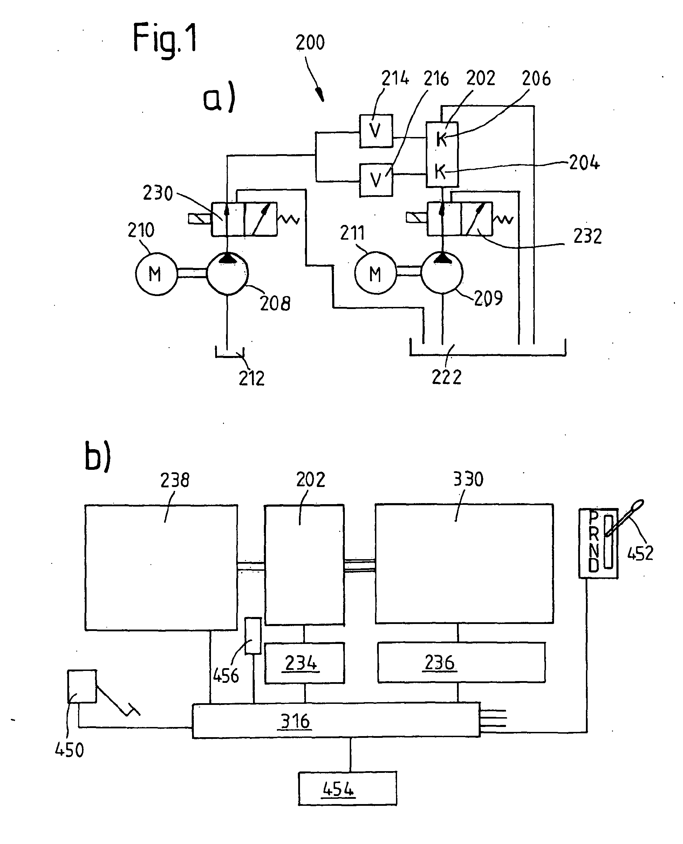

Fig. 1 zeigt in Teilfig. 1 a schematisch ein Kupplungssystem 200, das eine nasslaufende Doppelkupplung 202 mit einer ersten, radial äußeren Kupplungsanordnung 206 und einer zweiten, radial inneren Kupplungsanordnung 204 aufweist. Bei den Kupplungsanordnungen 204 und 206 handelt es sich um nasslaufende Kupplungsanordnungen, beispielsweise um nasslaufende Lamellen-Kupplungsanordnungen, die auf an sich bekannte Weise jeweils wenigstens ein Lamellenpaket aufweisen, die beim vorliegenden Ausführungsbeispiel radial übereinander angeordnet sind und jeweils durch einen zugeordneten Betätigungskolben eines in die Doppelkupplung integrierten hydraulischen Nehmerzylinders betätigt werden. Beispiele für derartige Doppelkupplungen sind in weiteren Offenlegungsschriften bzw. Patentanmeldungen der Anmelderin offenbart.

Das Kupplungssystem 200 weist zwei voneinander unabhängige Pumpen, nämlich eine erste Pumpe 208 und eine zweite Pumpe 209, auf, die vorzugsweise jeweils durch einen Elektromotor 210 bzw. 211 angetrieben werden. Die erste Pumpe 208 stellt Druckmedium, insbesondere Drucköl, bei einem vergleichsweise hohen Druck bereit, der zur Betätigung der Kupplungsanordnungen 204 und 206 der Doppelkupplung 202 ausreicht. Zur wahlweisen Betätigung der Kupplungsanordnungen sind diese, genauer deren hydraulische Nehmerzylinder, jeweils über ein zugeordnetes Ventil 214 bzw. 216 an der Pumpe 208 angeschlossen. Die Pumpe saugt Druckmedium aus einem Reservoir 212 an.

Die zweite Pumpe 209 stellt einen vergleichsweise großen Volumenstrom an Kühlmedium, insbesondere Kühlöl bereit, das zur Kühlung der Kupplungsanordnungen 204 und 206 dient. Die Pumpe 209 saugt das Kühlmedium, ggf. Öl, aus einem Reservoir 222 an. Es sei angemerkt, dass es nicht zwingend ist, dass es sich bei dem Reservoir 222 um ein gegenüber dem Reservoir 212 gesondertes Reservoir handelt.

Um bei tiefen Temperaturen das Kühlöl schneller auf Betriebstemperatur bringen zu können, ist auf der Abgabeseite der Pumpe 208 sowie auf der Abgabeseite der Pumpe 209 ein Umschaltventil 230 bzw. 232 vorgesehen. Mittels der Ventile kann eine Bypassleitung zum Vorratsbehälter 222 freigeschaltet werden, um durch Umlaufenlassen des Betriebsmediums bzw. Druckmediums an der Kupplungseinrichtung (Doppelkupplung) 202 vorbei Wärme in das Öl einzubringen und dieses damit zu erwärmen. Die Aufwärmzeit zur Erreichung der Betriebstemperatur kann hierdurch deutlich verkürzt werden und es kann dementsprechend relativ schnell ein Zustand erreicht werden, in dem in den Kupplungsanordnungen 204 und 206 keine störenden Schleppmomente auf Grund temperaturbedingt zu hoher Viskosität (zu großer Zähigkeit) mehr auftreten.

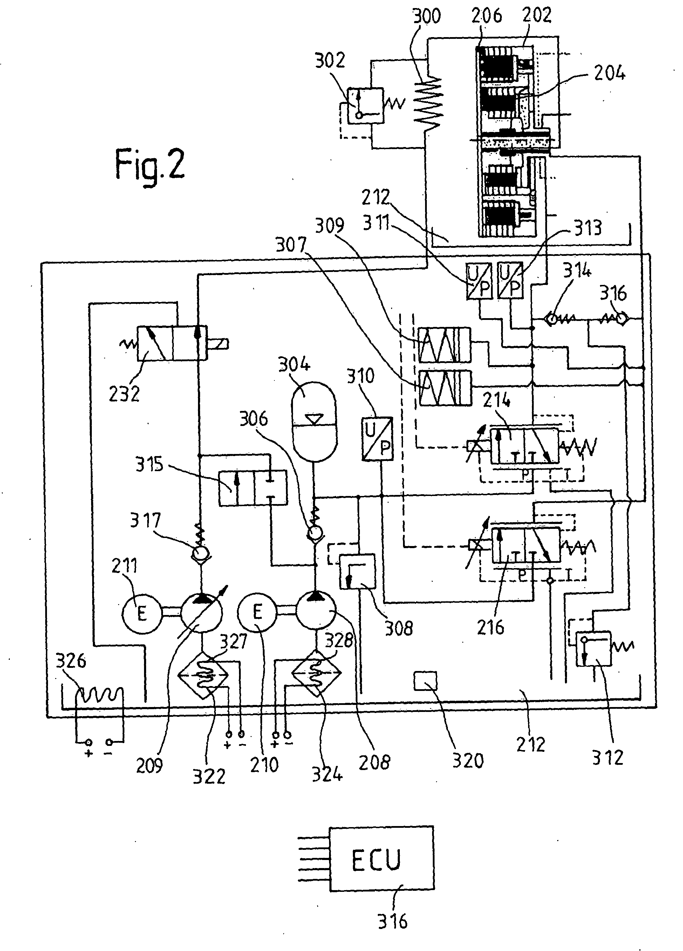

Teilfig. 1 b zeigt einen erfindungsgemäßen Kraftfahrzeug-Antriebsstrang mit der Doppelkupplung 202, einer dieser zugeordneten Betätigungseinrichtung 234 (beispielsweise von der in Fig. 2 gezeigten, die Steuerventile 214 und 216 umfassenden Art), einem mittels einer Betätigungseinrichtung 236 automatisiert betätigbaren Lastschaltgetriebe 330 mit zwei koaxial verlaufenden Getriebeeingangswellen und einer als Verbrennungsmotor ausgeführten Antriebseinheit 238. Die genannten Komponenten sind direkt oder über die jeweils zugeordnete Betätigungseinrichtung von einer beispielsweise als ECU oder/und TCU bezeichenbaren Steuereinrichtung 316 steuerbar. Die Steuereinrichtung 316, die auch als Steuereinheit bezeichenbar ist, kann aus mehreren miteinander kommunizierenden Teil-Steuereinheiten bestehen und Signale von diversen Sensoren und Betätigungselementen erhalten, so etwa von einem Schalthebel 452, der beispielsweise die Schaltstellungen P (Parkmodus), R (Rückwärtsfahrmodus), N (Neutralmodus) und D (Vorwärtsfahrmodus) aufweist, und von einem Bremspedal 450. Ein von der Steuereinrichtung angesteuertes Bremssystem des Fahrzeugs ist in Fig. 1b mit 454 bezeichnet, und ein von der Steuereinrichtung ansteuerbarer Anlasser ist in Fig. 1b mit 456 bezeichnet.

Fig. 2 zeigt ein Ausführungsbeispiel eines erfindungsgemäßen Kupplungssystems der in Fig. 1 gezeigten Grundstruktur in näheren Einzelheiten.

Gemäß Fig. 2 wird das Kühlöl der Doppelkupplung 202 über einen Wärmetauscher 300 zugeführt, da es beispielsweise im Falle eines längeren Schlupfbetriebs zu einer merklichen Temperaturerhöhung auch des Öls im Ölsumpf 212 kommen kann. Durch den Wärmetauscher 300 wird die Öltemperatur auf einem zur Kühlung der Doppelkupplung hinreichenden Temperaturniveau gehalten. Da das Kühlöl bei tieferen Temperaturen recht dickflüssig werden kann und aufgrund des Strömungswiderstands des Wärmetauschers 300 bei besonders tiefen Temperaturen unter Umständen nicht mehr genügend Kühlöl die Doppelkupplung erreichen würde bzw. ein zu hoher Öldruck zu Beschädigungen führen könnte, ist ein beispielsweise unter Federvorspannung stehendes Bypassventil 302 vorgesehen, das dann, wenn der Kühlöldruck stromabwärts des Ölkühlers 300 eine vorgegebene Druckschwelle übersteigt, aufmacht und das Kühlöl am Ölkühler 300 vorbei zur Doppelkupplung durchlässt.

Beim Ausführungsbeispiel der Fig. 2 ist im Kupplungsbetätigungs-Druckölkreis ein ein unter Druck stehendes Gaspolster aufweisender Druckölspeicher 304 eingebaut, der von der Pumpe 208 über ein Rückschlagventil 306 geladen wird und über das Ventil 214 und das Ventil 216 an den Betätigungs-Nehmerzylindern der beiden Kupplungsanordnungen 204 und 206 angeschlossen ist. Der Druckölspeicher 304 sorgt für ein gleichmäßiges Druckniveau, was insbesondere im Falle einer Ausbildung der Pumpe 208 als Kolbenpumpe zweckmäßig ist, und ermöglicht, dass für die Pumpe 208 eine Pumpe mit besonders kleinem Fördervolumen ausreicht. Das von der Pumpe 208b pro Zeiteinheit abgegebene Ölvolumen kann also kleiner sein als das während einer Kupplungsbetätigung pro Zeiteinheit benötigte Druckölvolumen.

Der Druckölkreis zwischen dem Rückschlagventil 306 und den Ventilen 214 und 216 ist durch ein Druckbegrenzungsventil 308 gegen einen übermäßig hohen, ggf. zu Beschädigungen führenden Druck des Drucköls gesichert. Der durch den Füllzustand des Speichers 304 bestimmte Druck in diesem Druckölkreis wird durch einen Drucksensor 310 erfasst. Ferner kann den Abgabeseiten der Ventile 214 und 216 eine Drucksensoranordnung, beispielsweise je ein Drucksensor 311 bzw. 313 für beide Ventile, zugeordnet sein, die die jenseits der Ventile herrschenden, auf die hydraulischen Nehmerzylinder wirkenden Hydraulikdrücke erfasst.

Ein weiteres Druckbegrenzungsventil 312 sorgt dafür, dass der jenseits den Ventilen 214 und 216 herrschende, auf die hydraulischen Nehmerzylinder der Kupplungseinrichtungen wirkende Druck einen Maximalwert nicht übersteigt, beispielsweise um ebenfalls Beschädigungen vorzubeugen. Über zwei Rückschlagventile 314 und 316 wird erreicht, dass ein Druckbegrenzungsventil ausreicht, um den Betätigungsdruck von beiden hydraulischen Nehmerzylindern zu überwachen.

Zur Gewährleistung einer guten Regelbarkeit/Steuerbarkeit der Kupplungsbetätigung kann ein jeweiliger Hydrodämpfer 307 bzw. 309 (beispielsweise umfassend einen federbelasteten Kolben, eine Metallbalgfeder oder dergleichen) parallel zu den beiden hydraulischen Nehmerzylindern der Kupplungseinrichtungen 204 und 206 angeschlossen sein. Durch derartige Hydrodämpfer werden Druckspitzen im Hydrauliksystem abgedämpft.

Für den Fall, dass bei tiefen Temperaturen, also einer hohen Viskosität des Öls, der Druck des Kühlöls zur Kühlung der Kupplung nicht ausreicht, etwa weil die für die Pumpe 209 verwendete hydrodynamische Pumpe keinen hinreichenden Druck erzeugen kann, ist bei der Anordnung gemäß Fig. 2 ein Ventil 315 vorgesehen, über das ein kleiner Volumenstrom aus dem von der Pumpe 208 bereitgestellten Druckölstrom abgezweigt werden kann, um eine Art "Notkühlung" der Kupplungsanordnungen vorzusehen, wenn dies erforderlich ist. Da die ein Öffnen des Ventils 315 erforderlich machende hohe Viskosität des Kühlöls nur bei tiefen Temperaturen vorkommt, bei denen sowieso nur ein geringer Kühlungsbedarf für die Doppelkupplung besteht, reicht ein relativ kleiner "Notkühlölstrom" aus. Diese "Notkühlung" ist überdies nur solange erforderlich, bis die Temperatur des Öls und damit die Viskosität des Öls ausreicht, um eine hinreichende Förderleistung der Kühlölpumpe 209 zu gewährleisten. Anstelle eines Ventils 315 könnte auch eine sogenannte Blende oder Drossel oder dergleichen vorgesehen sein, über die ständig ein kleiner Volumenstrom aus dem von der Pumpe 208 bereitgestellten Druckölstrom in den Kühlkreislauf abgezweigt wird. Ist das das Kühlöl nur im Bedarfsfall abzweigende Ventil 315 vorgesehen, kann die Pumpe 208 eventuell auch kurzfristig in einem Überlastbetrieb betrieben werden, um in der kurzen Zeitspanne bis zur hinreichenden Erwärmung des Öls ausreichend Kühlöl bereitzustellen. Da es sich in der Regel nur um sehr kurze Bedarfszeiträume handelt, wird die Lebensdauer der Pumpe 208 dadurch nicht wesentlich verkürzt. Um unabhängig vom Betriebszustand der Pumpe 209 zu gewährleisten, dass von der Druckpumpe 208 in den Kühlkreislauf geliefertes Öl nicht zurück in den Ölsumpf 212 fließt, kann mit der Pumpe 209 ein Rückschlagventil 317 in Reihe geschaltet, insbesondere der Pumpe nachgeschaltet, sein.

Auch beim Beispiel der Fig. 2 ist das Bypassventil 232 vorgesehen, um bei tiefen Temperaturen einen Umlaufmodus einstellen zu können, in dem die Pumpe 209 das Kühlöl an der Doppelkupplung 202 vorbei umwälzt. Man kann das Ventil auch so ausführen, dass ein Teil des von der Pumpe 209 bereitgestellten Kühlölflusses zur Doppelkupplung 202 geführt wird und der andere Teil über die Bypassleitung zum Ölsumpf 212 zurückgeführt wird. Damit ist zumindest ein eingeschränkter Kupplungsbetrieb bzw. Fahrbetrieb des den Antriebsstrang aufweisenden Kraftfahrzeugs auch im Umwälzmodus möglich.

Fig. 2 zeigt noch eine elektronische Steuereinheit ECU (Bezugszeichen 316), die in Abhängigkeit von einer jeweiligen Führungsgröße die Steuer/ Regel-Ventile 214 und 216 betätigt. Es kann ferner vorgesehen sein, dass der Steuereinheit Messwerte von diversen Sensoren, beispielsweise vom Drucksensor 310 und anderen Drucksensoren (einschließlich ggf. den Sensoren 311 und 313), sowie von Temperaturfühlern oder Temperatursensoren zugeführt bekommt. Gedacht wird insbesondere an einen oder mehrere Temperatursensoren, die die Temperatur des Kupplungskühlölkreislaufs (Pumpe 209, Kühler 300 oder Bypassventil 302, Kupplungseinrichtung 202, Sumpf 212) erfasst. Ein entsprechender, beispielsweise im Kupplungsölsumpf 212 angeordneter und die Temperatur des im Kreislauf umlaufenden bzw. im Sumpf enthaltenen Öls erfassender Sensor 320 ist schematisch dargestellt. Die elektronische Steuereinheit kann ferner das auf die Zeiteinheit bezogene Fördervolumen der Pumpe 209 oder/und einen durchgelassenen Volumenstrom eines im Kreislauf angeordneten Volumenstrom-Einstellventils (nicht dargestellt) steuern oder regeln, beispielsweise auf Grundlage des vom Sensor 320 erfassten Temperatursignals. Auf diese Weise kann der Temperaturhaushalt der Kupplungseinrichtung 202 bzw. des Kupplungskühlölkreislaufs beeinflusst werden. Durch Einstellung des Umwälzungsgrads im Kühlkreislauf kann Einfluss auf die Abkühlgeschwindigkeit im Kühler 300 genommen werden (größeres oder kleiners ÄT am Kühler) und es können turbulente Strömungszustände einerseits oder laminare Strömungsverhältnisse andererseits ausgenutzt werden.

Der Vollständigkeit halber soll noch darauf hingewiesen werden, dass die mit 322 und 324 bezeichneten Komponenten in Fig. 2 Ölfilter darstellen. Alternativ oder zusätzlich können Ölfilter auch auf der Abgabeseite der jeweiligen Pumpe 208 bzw. 209 vorgesehen sein. Es versteht sich, dass die elektronische Steuereinheit 216 neben den Steuer-Regel-Ventilen 214 und 216 auch die Ventile 232 und 315 situationsabhängig betätigt.

Um nach dem Starten des Kraftfahrzeugs insbesondere bei tiefen Umgebungstemperaturen das Kühlöl und damit die Kupplungseinrichtung bzw. Doppelkupplung 202 auf Betriebstemperaturen zu bringen und insbesondere die Zähflüssigkeit des Kühlöls schnell soweit herabzusetzen, dass das System voll funktionsfähig ist, kann eine elektrische Öl-Erwärmungsanordnung vorgesehen sein, die beispielsweise wenigstens ein Heizelement 326 im Ölsumpf 212 oder/und wenigstens ein in die Ansaugleitung der Pumpe 209, beispielsweise in den Filter 322, integriertes Heizelement 327 aufweist. Auch in die Ansaugleitung der Pumpe 208, beispielsweise in den Filter 224, kann wenigstens ein Heizelement integriert sein. Als Heizelemente können beispielsweise etwa 30 mm x 50 mm große Heizplättchen verwendet werden, die auf ihrer Oberfläche eine Art Heizwendel aufweisen und z. B. eine Heizleistung von ca. 300 W abgeben können. Auch andersartige Heizelemente, beispielsweise in der Art von Glühkerzen für Dieselmotoren, sind einsetzbar. Eine andere Möglichkeit ist, eine Wärmeenergiespeicheranordnung, etwa ein sogenannter Latenzspeicher, vorzusehen.

Durch Integration wenigstens eines Heizelements in einen jeweiligen Ansaugtrakt der Kühlölpumpe 209 oder/und der Druckölpumpe 208 kann gezielt das tatsächlich gepumpte Öl erwärmt werden, ohne dass zwangsweise das gesamte Ölvolumen erwärmt werden muss. Dementsprechend wird elektrische Energie gespart. Ferner kann gewährleistet werden, dass nur vorgewärmtes Öl von der betreffenden Pumpe gepumpt wird.

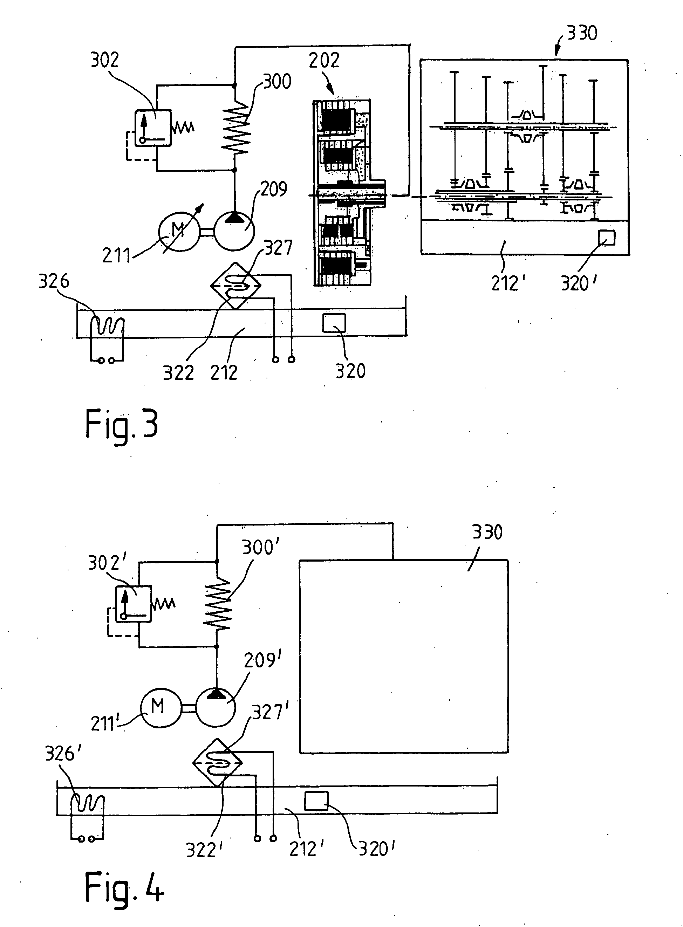

Fig. 3 zeigt das Kupplungssystem der Fig. 2 (nicht alle Komponenten sind gezeigt) in Kombination mit einem Doppelkupplungsgetriebe 330. Das vorzugsweise automatisiert betätigbare Getriebe 330 kann einen eigenen, gegenüber dem Kühlölkreislauf der Kupplungseinrichtung 202 gesonderten Kühlölkreisölauf aufweisen, beispielweise von der in Fig. 4 dargestellten Art. Eine von einem Motor 211' angetriebene Ölpumpe 209' saugt Kühlöl aus einem Reservoir (dem Getriebesumpf) 212' an. Das geförderte Kühlöl wird normalerweise über einen Kühler 300' den zu kühlenden Komponenten des Getriebes 330 zugeführt. Zur Vermeidung von zu hohen Drükken im Kühlölkreislauf bei tiefen Temperaturen ist ein beispielsweise druckbetätigtes Bypassventil 302' vorgesehen, das bei Überschreitung einer Druckschwelle eine den Kühler 300' umgehende Bypassleitung freigibt. Der Getriebekühlölkreislauf entspricht insoweit dem Kupplungskühlölkreislauf gemäß Fig. 2 und 3. Der Kühler 300' mit der Bypassleitung kann, wie in Fig. 4 gezeigt, zwischen der Pumpe 209' und dem Getriebe (ggf. Automatik-Getriebe) 330 angeordnet sein. Es ist aber auch denkbar, dass Kühler und Bypass-Schaltung dem Getriebe bzw. Getriebe-Automat nachgeschaltet sind. Dem Getriebekühlölkreislauf kann ein Temperatursensor 320' zugeordnet sein, der die Temperatur des umlaufenden Kühlöls misst und entsprechende Messwerte beispielsweise an die elektronische Steuereinheit ECU der Fig. 2 liefert. Gemäß Fig. 3 und 4 ist der Temperatursensor 320' im Getriebesumpf 212' angeordnet.

In Abweichung von den vorstehenden Ausführungen zu Figuren 3 und 4 kann man für die Doppelkupplung und das Getriebe auch einen gemeinsamen bzw. situationsabhängig zusammenschaltbaren Kühlölkreislauf vorsehen.

Anstelle des druckbetätigten Bypassventils 302 im Falle des Kupplungskühlölkreislaufs bzw. 302' im Falle des Getriebekühlölkreislaufs kann ein elektrische betätigbares Umschaltventil, beispielsweise ein 3-2-Wege-Ventil vorgesehen sein, um bedarfsabhängig bzw. gemäß einer Wärmemanagement-Strategie (etwa zum gezielten Erreichen und Halten einer Soll-Betriebstemperatur) eine den Kühler 300 umgehende Bypassleitung freizugeben, so dass das Kühlöl an dem Kühler 300 bzw. 300' vorbei zur Doppelkupplung 202 bzw. zu den zu kühlenden Getriebekomponenten geführt wird, bzw. diese Bypassleitung wieder zu sperren.

Die Doppelkupplung 202 kann vorteilhaft nach einem Starten des Kraftfahrzeugs, beispielsweise im Falle von tiefen Umgebungstemperaturen, mit definiertem Schlupf betrieben werden, um das Kühlöl möglichst schnell auf Betriebstemperatur aufzuwärmen. Die Aufwärmung des Kühlöls erfolgt durch im Schlupfbetrieb an den Lamellen auftretende Reibung. Um eine Überhitzung des betreffenden Lamellenpakets bzw. der Doppelkupplung zu vermeiden und die gewünschte Erwärmung des Kühlöls möglichst schnell zu erreichen, sollte während des Schlupfbetriebs ständig ein beispielsweise von der Pumpe 209 bereitgestellter Kühlölstrom fließen.

Die insbesondere bei niedrigen Außentemperaturen bei einem etwa im freien abgestellten Kraftfahrzeug auftretende hohe Viskosität eines verwendeten Kühlöls kann durchaus erhebliche Probleme verursachen. Durch die bei tiefen Temperaturen (etwa Öltemperaturen kleiner als 0°C) auftretende erhöhte Zähigkeit des Öls können in den Lamellen-Kupplungsanordnungen sehr hohe Schleppmomente auftreten (bis zu Werten größer als 25 Nm) gegenüber bei Betriebstemperatur (ca. 90°C) auftretenden Schleppmomenten beispielsweise kleiner als 2 Nm. Ferner können auf Grund von durch zwischen den Lamellen befindliches Öl zusammenklebenden Lamellen Losbrech- bzw. Loslösmomente bis über 50 Nm auftreten. In Folge der hohen Schleppbzw. Losbrechmomente kann ein Einlegen eines Ganges praktisch unmöglich werden, weil herkömmliche Synchronisiereinrichtungen des Getriebes nicht für die Überwindung derartig hoher Momente ausgelegt sind. Kann man keine Gänge einlegen bzw. nicht schalten, so ist eine Bewegung des Kraftfahrzeugs nicht möglich.

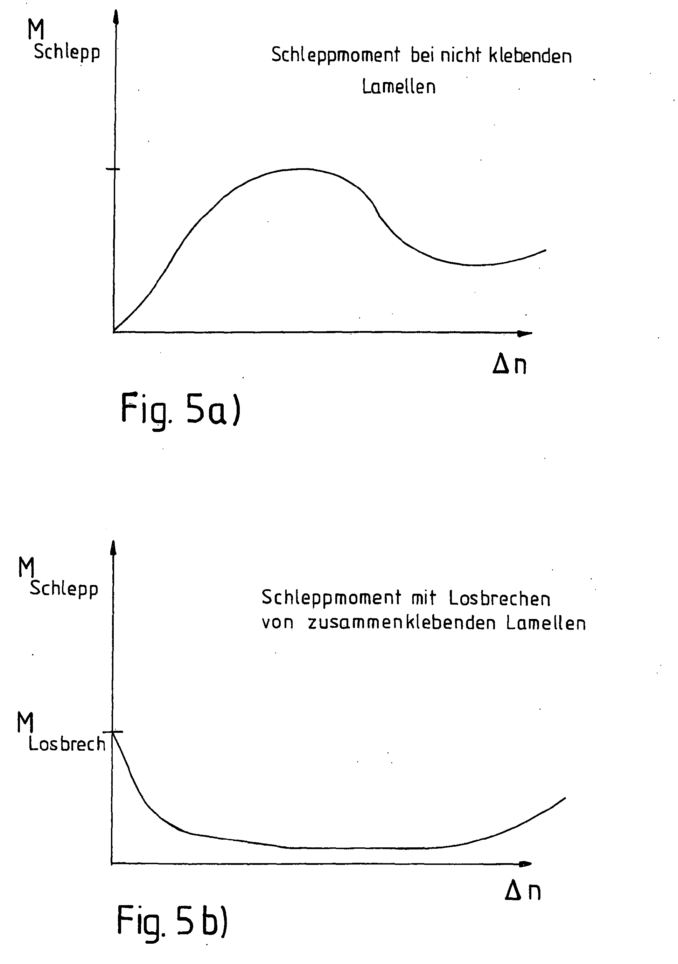

Fig. 5a zeigt einen typischen bzw. exemplarischen Verlauf des bei tiefen Temperaturen in der Kupplungseinrichtung auftretenden Schleppmoments auf Grund von zwischen den Lamellen befindlichem Kühlöl entsprechend hoher Viskosität als Funktion der Differenzdrehzahl Än zwischen Eingangsseite und Ausgangsseite der betreffenden Kupplungsanordnung. Fig. 5b zeigt das bei tiefen Temperaturen auftretende Losbrechmoment auf Grund von zusammenklebenden Lamellen und den Übergang zum Schleppmoment gemäß Fig. 5a. Ergänzend wird auf den Aufsatz "Schleppmomente an nasslaufenden Lamellenbremsen" von N. Holzer und D. Frey, Friedrichshafen, sowie B. Matthes, Heidelberg, in VDI BERICHTE 1323, Seiten 469 bis 489 auf Grund einer Tagung der VDI-Gesellschaft Entwicklung Konstruktion Vertrieb am 03. und 04.03.1997 in Fulda "Kupplungen in Antriebssystemen '97" verwiesen.

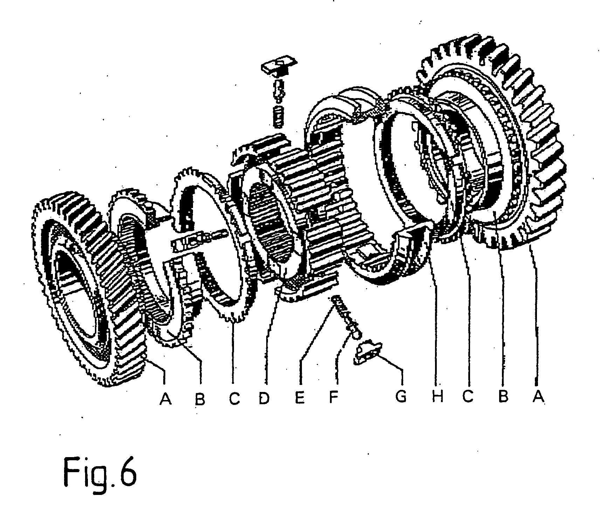

Fig. 6 zeigt ein Beispiel für eine herkömmliche Einkonus-Synchronisierung nach dem System Borg-Warner (ZF) mit einem nadelgelagerten Losrad A, einem Kupplungskörper B mit Schaltverzahnung und Reibkonus, einem Hauptfunktionsträger - Synchronring C mit Gegenkonus und Sperrverzahnung, einem Synchronkörper D mit Innenverzahnung für den Formfluss mit einer Getriebewelle und Außenverzahnung für die Schaltmuffe, eine Druckfeder E, einem Kugelbolzen F, einem Druckstück G und einer Schaltmuffe H mit Klaueninnenverzahnung. Würde man versuchen, bei stehendem Kraftfahrzeug und nicht laufendem Motor einen Gang einzulegen, so kann es passieren, dass das Einlegen des Ganges daran scheitert, dass die Schaltverzahnung des Kupplungskörpers des jeweiligen Gangrats mit den Zahnflanken des zugehörigen Gegenrads der Schaltmuffe der Synchroneinrichtung zusammentrifft, so dass die Verzahnungen nicht in Mitnahmeeingriff treten können. Das Einlegen eines Ganges ist also nur dann möglich, wenn die Schaltverzahnung des Kupplungskörpers auf die Zahnzwischenräume des zugehörigen Gegenrads trifft.

Damit ist es bei herkömmlicher Ausbildung der zugeordneten Aktuatorik kein echter Lösungsansatz, wenn man daran denken sollte, zur Vermeidung des Einlegeproblems bei tiefen Temperaturen auf Grund nicht für die Überwindung der Schleppmomente ausgelegten Synchronisiereinrichtungen einen Anfahrgang bei stehendem Kraftfahrzeug im Zustand noch nicht laufender Antriebseinheit einzulegen.

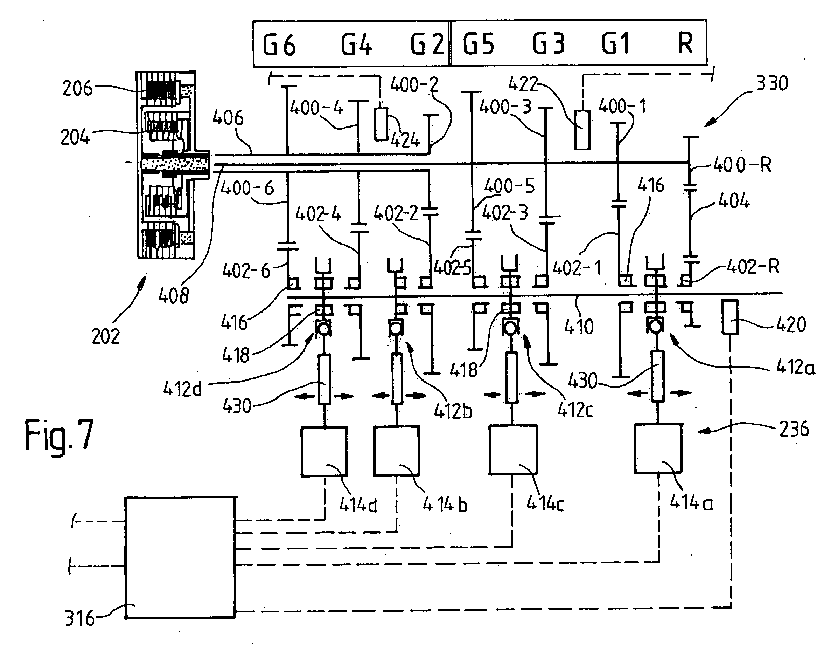

In Fig. 7 ist ein Doppelkupplungsgetriebe 330 schematisch dargestellt, dass sieben Gänge, nämlich sechs Vorwärtsgänge G1, G2, G3, G4, G5 und G6 und ein Rückwärtsgang R aufweist. Den Vorwärtsgängen ist jeweils ein Zahnradpaar, bestehend aus einem Antriebsrad 400-1, 400-2, 400-3, 400-4, 400-5 und 400-6 und einem Abtriebsrad 402-1, 402-2, 402-3, 402-4, 402-5 und 402-6, zugeordnet. Der Rückwärtsgang R weist zusätzlich zu einem Antriebsrad 400-R und einem Abtriebsrad 402-R ein die Drehrichtung umkehrendes Zwischenrad 404 auf, das mit dem Antriebsrad 400-R und dem Abtriebsrad 402-R kämmt. Die den Gängen G2, G4 und G6 zugeordneten Antriebsräder sind drehfest mit einer radial äußeren Getriebeeingangswelle 406 verbunden und die den Gängen G1, G3, G5 und R zugeordneten Antriebsräder sind drehfest mit einer radial inneren Getriebeeingangswelle 408 verbunden. Die jeweiligen Abtriebsräder sind drehbar auf einer Getriebeausgangswelle 410 gelagert und mit dieser zur Schaltung der Gänge über zugeordnete Schalt- und Synchronisiervorrichtungen 412a, 412b, 412c und 412d drehfest verbindbar. Die Schalt- und Synchronisiervorrichtungen 412a, 412c und 412d sind doppelseitig wirksam ausgebildet, d.h., dass durch diese jeweils alternativ einer von zwei Gängen schaltbar ist, im Falle der Synchronisiervorrichtung 412a der erste Vorwärtsgang G1 oder der Rückwärtsgang R, im Falle der Synchronisiervorrichtung 412c der dritte Vorwärtsgang G3 oder der fünfte Vorwärtsgang G5 und im Falle der Synchronisiervorrichtung 412d der vierte Vorwärtsgang G4 oder der sechste Vorwärtsgang G6. Die Synchronisiervorrichtung 412b hingegen ist nur einseitig wirksam ausgebildet und dient zum Schalten nur des zweiten Vorwärtsgangs G2.

Wie aus der schematischen Figur ersichtlich bzw. schon erwähnt, sind die Getriebeeingangswellen 406 und 408 koaxial zueinander angeordnet, und es sind die ungeradzahligen Gänge G1, G3 und G5 und der Rückwärtsgang R der zentral angeordneten Getriebeeingangswelle 408 und die geradzahligen Gänge G2, G4 und G6 der als Hohlwelle ausgebildeten Getriebeeingangswelle 406 zugeordnet. Die beiden Getriebeeingangswellen stehen jeweils mit nur einer der Kupplungsanordnungen 204 und 206 in Verbindung, beispielsweise die Getriebeeingangswellen 406 mit der Ausgangsseite der Kupplungsanordnung 206 und die Getriebeeingangswelle 208 mit der Ausgangsseite der Kupplungsanordnung 204. Die Eingangsseiten der beiden Kupplungsanordnungen stehen jeweils mit der Abtriebswelle der Antriebseinheit, beispielsweise ein Verbrennungsmotor, in Verbindung.

Während des normalen Fahrbetriebs ist einer der Getriebegänge eingelegt und die diesem zugeordnete Kupplungsanordnung geschlossen. Bei einem Schaltvorgang wird zuerst ein Zielgang, beispielsweise der nächsthöhere oder nächstniedrige Vorwärtsgang, geschaltet und dann erfolgt vorzugsweise die an sich bekannte Überschneidungsschaltung, bei der das Antriebsmoment von der einen zur anderen Getriebeeingangswelle verlagert wird, um ein zugkraftunterbrechungsfreies Schalten vorzusehen.

Beim gezeigten Ausführungsbeispiel ist das Doppelkupplungsgetriebe 330 als automatisiertes Schaltgetriebe ausgebildet. Dazu ist den Schalt- und Synchronisiervorrichtungen 412a bis 412d jeweils ein beispielsweise elektromotorischer Schaltstellantrieb 414a, 414b, 414c bzw. 414d zugeordnet, die auf die jeweilige Schalt- und Synchronisiervorrichtung wirken, beispielsweise durch eine kraft- oder/und formschlüssige Betätigungsverbindung. Durch die Schaltstellantriebe können die Schalt- und Synchronisiervorrichtungen in axialer Richtung bewegt und mit Stellkräften beauftragt werden, wie durch die Doppelpfeile angedeutet ist. An den Abtriebsrädern und den Schalt- und Synchronisiervorrichtungen sind Mitnahmeformationen 416 und 418 schematisch dargestellt, die zur Kopplung des jeweiligen Abtriebsrads mit der Getriebeausgangswelle 410 in gegenseitigen Eingriff treten.

Die Schaltstellantriebe sind über zugeordnete Steuerleitungen mit der Steuereinrichtung 316 verbunden und durch diese ansteuerbar. Eine Drehzahl der Getriebeausgangswelle bzw. Getriebeabtriebswelle 410 kann durch einen Drehzahlsensor 420 detektiert werden. Es können ferner noch einer jeweiligen der beiden Getriebeeingangswellen zugeordnete und deren Drehzahl erfassende Drehzahlsensoren 422 und 424 vorgesehen sein, so dass die Steuereinrichtung 316 ggf. Informationen über alle drei Drehzahlen erhält. Eine andere, alternativ oder zusätzlich vorzusehende Möglichkeit ist, dass die Drehzahl der Abtriebswelle der Antriebseinheit durch einen mit der Steuereinrichtung verbundenen Drehzahlsensor erfasst wird.

Zur Erleichterung des Einlegens von Gängen bei einem mit ausgelegten Gängen abgestellten Kraftfahrzeug sind die die Betätigungsverbindungen herstellenden, beispielsweise in der Art von Schaltgabeln ausgeführten Verbindungs- und Betätigungselemente zwischen den Schalt- und Synchronisiervorrichtungen und dem jeweiligen Schaltstellantrieb elastisch ausgeführt, beispielsweise mit einem jeweiligen Federabschnitt 430. Wird bei stehendem Kraftfahrzeug und noch nicht laufendem Motor durch einen entsprechenden Befehl von der Steuereinrichtung 316 ein Schaltstellantrieb, beispielsweise der Schaltantrieb 414a, im Sinne eines Einlegens des ersten Gangs oder des Rückwärtsgangs betätigt, so wird entweder unmittelbar der Gang eingelegt, sofern die Mitnahmeformationen des betreffenden Abtriebsrads und die zugeordneten Mitnahmeformationen der betreffenden Schalt- und Synchronisiervorrichtung in gegenseitigen Eingriff treten (also, wenn beispielsweise die Zähne der einen Verzahnung auf die Zahnzwischenräume der anderen Verzahnung treffen), oder der Gang wird nicht eingelegt, wenn die sogenannten Mitnahmeformationen nicht in gegenseitigen Eingriff treten können.

Ist ein derartiger Eingriff nicht möglich (etwa weil die Zähne der einen Verzahnung auf die Zähne der anderen Verzahnung treffen), so wird der als Kraftspeicher dienende Federspeicher 430 gespannt. Wird nun der Anlasser bei geöffneten Kupplungen betätigt, so wird unter der Voraussetzung tiefer Temperaturen, also des Auftretens von Losbrech- oder/und Schleppmomenten in den Kupplungsanordnungen, den kupplungs- bzw. motorseitigen Zahnrädern eine Drehbewegung erteilt, weil der Antriebsstrang auf Grund der Losbrech- bzw. Schleppmomente trotz geöffneter Kupplungsanordnungen nicht vollständig vom Motor getrennt ist. Die Zahnräder auf der Getriebeabtriebsseite stehen hingegen, da eine Parksperre eingelegt ist oder/und das Fahrzeug bei entriegelter Parksperre steht. Es kommt damit zu einer Relativ-Drehbewegung zwischen den Abtriebsrädern einerseits und den zugeordneten Schalt- und Synchronisiervorrichtungen, die diese in eine relative Drehstellung bringt, in der die Mitnahmeformationen in gegenseitigen Eingriff treten (etwa weil die Zähne der einen Verzahnung auf die Zahnzwischenräume der anderen Verzahnung treffen). Damit ist ein Einlegen eines Gangs im Falle eines mit ausgelegten Gängen abgestellten Kraftfahrzeugs auch bei tiefen Temperaturen möglich.

Alternativ oder zusätzlich können die Schaltstellantriebe auch dafür ausgebildet sein, für kurze Zeiträume gegenüber normalen Stellkräften vergößerte Stellkräfte aufzubringen, die im Dauerbetrieb die Schalt- und Synchronisiervorrichtungen übermäßig belasten würden, aber für spezielle Situationen (wie etwa eine hohe Viskosität des den Lamellen-Kupplungsanordnungen zugeordneten Kühlöls auf Grund niedriger Temperatur) vorteilhaft ein Gangeinlegen bzw. Gangwechseln ermöglichen. Eine gewisse Reduzierung der Lebensdauer der Schalt- und Synchroniservorrichtungen könnte man notfalls in Kauf nehmen, da derartige Situationen in der Regel nur selten vorkommen werden. Überdies kann die Steuereinrichtung 316 dafür ausgelegt sein, die überhöhten Betätigungskräfte nur für kurze Zeitintervalle und unter bestimmten Bedingungen einzustellen, so dass in der Praxis keine nennenswerte Verkürzung der Lebensdauer der Schalt- und Synchronisiervorrichtungen eintreten wird.

Die Steuereinrichtung 316 kann auch einen Betätigungsmodus aufweisen, in dem beim Schalten von einem Ausgangsgang zu einem Zielgang die dem Zielgang zugeordnete Getriebeeingangswelle nicht nur durch die dem Zielgang zugeordnete Schalt- und Synchronisiervorrichtung, sondern auch durch eine andere Schalt- und Synchronisiervorrichtung, die an sich dafür vorgesehen ist, beim Schalten zu einem der gleichen Getriebeeingangswelle zugeordneten, vom Zielgang verschiedenen Gang tätig zu werden. Beispielsweise könnte zur Vorbereitung und beim Einlegen des ersten Gangs G1 nicht nur die Schalt- und Synchronisiervorrichtung 412a sondern zusätzlich auch die Schalt- und Synchronisiervorrichtung 412c betätigt werden, damit diese Vorrichtungen gemeinsam die Getriebeeingangswelle 408 einer Drehzahl zumindest anzunähern, die der momentanen Fahrzeuggeschwindigkeit unter Berücksichtigung der Getriebeübersetzung im Zielgang (im Beispielsfall der erste Gang) entspricht. Umgekehrt kann zum Einlegen des dritten Gangs G3 oder des fünften Gangs G5 neben der Schalt- und Synchronisiervorrichtung 412c zusätzlich die Schalt- und Synchronisiervorrichtung 412a in diesem Sinne betätigt wird. Entsprechendes gilt für die der Getriebeeingangswelle 406 zugeordneten Gänge G2, G4 und G6. Es können jeweils zwei Schalt- und Synchronisiervorrichtungen (412b und 412d) bzw. (412a und 412c) in diesem Sinne gleichzeitig betätigt werden.

Es ist allerdings Sorge zu tragen, dass nicht versehentlich der falsche Gang eingelegt wird. Dies kann beispielsweise dadurch vermieden werden, dass die Steuereinrichtung 316 die Drehzahl der betreffenden Getriebeeingangswelle und der Getriebeausgangswelle 420 (oder/und der Abtriebswelle der Antriebseinheit) unter Berücksichtigung der Getriebeübersetzungen, insbesondere der Getriebeübersetzung des nicht einzulegenden Gangs, miteinander vergleicht und vor Erreichen des Synchronpunktes des nicht einzulegenden Gangs die auf die diesem nicht einzulegenden Gang zugeordnete Schalt- und Synchronsiervorrichtung wirkende Betätigungskräfte aufhebt oder zumindest hinreichend reduziert.

Durch die an der dem nicht einzulegenden Gang zugeordneten Schalt- und Synchronisiervorrichtung auftretende Reibarbeit kann auch bei tiefen Temperaturen trotz in der Kupplungseinrichtung 202 auftretenden Schleppmomenten ein Gang eingelegt werden bzw. von einem Ausgangsgang zu einem Zielgang geschaltet werden.

Die Steuereinrichtung 316 ist vorteilhaft dafür ausgelegt, über die Schaltstellantriebe gleichzeitig wenigstens zwei Gänge einzulegen. Es wird insbesondere daran gedacht, dass eine Parksperre dadurch realisiert ist, dass auf der gleichen Getriebeeingangswelle zwei Getriebegänge eingelegt werden. Diese Maßnahme ist an sich aus der nicht vorveröffentlichte DE 199 50 696 A1 bekannt.

Vorteilhaft können aber auch wenigstens ein Gang auf der einen Getriebeeingangswelle und wenigstens ein Gang auf der anderen Getriebeeingangswelle eingelegt werden, wobei vorzugsweise wenigstens ein Vorwärtsgang und der Rückwärtsgang zu den eingelegten Gängen gehören. Diese Gänge werden vorzugsweise vollautomatisch durch die Steuereinrichtung eingelegt, wenn das Kraftfahrzeug abgestellt wird. Soll dann wieder losgefahren werden, so könnte es sein, dass auf Grund zu niedriger Außentemperaturen große Schleppmomente in der Kupplungseinrichtung auftreten, so dass kein Gang mehr eingelegt werden kann (es sei denn, dass die obigen Vorschläge realisiert sind). Sind hingegen, wie hier vorgeschlagen, der Rückwärtsgang auf der einen Getriebeeingangswelle und wenigstens ein Vorwärtsgang auf der anderen Getriebeeingangswelle eingelegt, so kann durch Einkuppeln der einen und Ausgekuppelthalten bzw. Auskuppeln der anderen Kupplungsanordnung entweder der Vorwärtsgang oder der Rückwärtsgang zum Anfahren aktiviert werden. Für viele Situationen wird es auch ausreichen, wenn nur ein Gang, etwa der Vorwärtsgang, eingelegt wird, vorzugsweise automatisch durch die Steuereinrichtung 316.

Abgesehen von dem Aspekt der Parksperre macht es durchaus auch in anderer Hinsicht Sinn, auf wenigstens einer der Getriebeeingangswellen, vorzugsweise auf beiden Getriebeeingangswellen, mehrere Gänge einzulegen, wenn das Kraftfahrzeug abgestellt wird. Dies ermöglicht nämlich zum Anfahren eine Auswahl aus mehreren Gängen. Es sind dann alle nicht benötigten Gänge auszulegen, beispielsweise alle Vorwärtsgänge bis auf einen Anfahrgang und den Rückwärtsgang.

Um beim Anlassen des Motors eine unkontrollierte Bewegung des Kraftfahrzeugs auf Grund wenigstens eines eingelegten Gangs und der bei tiefen Temperaturen auftretenden Schleppmomente bzw. Losreismomente in der Kupplungseinrichtung zu vermeiden, ist vorzugsweise eine Sicherheitsfunktionalität der Steuereinrichtung 316 vorgesehen. Die Steuereinrichtung 316 kann beispielsweise ein Starten des Motors nur dann zulassen, wenn gleichzeitig die Fußbremse 450 (vgl. Fig. 1b) betätigt wird. Das Starten oder nicht Starten kann auch von der momentanen Stellung des Schalthebels 452 abhängig gemacht werden, beispielsweise ein Starten nur im Parkmodus P erlaubt werden.

Ferner ist es aus Sicherheitsgründen vorteilhaft, wenn die Sicherheitsfunktionalität die Aufhebung des Parkmodus, in dem beispielsweise zwingend eine Parksperre aktiviert ist, und den Wechsel in den Rückwärtsfahrmodus R bzw. den Vorwärtsfahrmodus D trotz entsprechender Betätigung des Schalthebels 452 nur dann zulässt, wenn gleichzeitig die Fußbremse 450 betätigt wird. Hierdurch wird verhindert, dass es zu einer unkontrollierten Bewegung des Kraftfahrzeugs kommt, wenn die Parksperre ausgelegt bzw., im Falle von noch nicht eingelegten Gängen, ein Vorwärts-Anfahrgang oder der Rückwärtsgang eingelegt wird. Eine andere Möglichkeit ist, dass das Aufheben des Parkmodus bzw. - im Falle von noch nicht eingelegten Gängen - das Einlegen eines Gangs mit einer Betätigung des Fahrzeug-Bremssystems 454 zwangsgekoppelt ist. Trotz nicht betätigtem Bremspedal wird dann automatisch dafür gesorgt, dass die Fahrzeugbremsen betätigt werden, um eine unkontrollierte Bewegung des Fahrzeugs zu vermeiden.

Man kann vorsehen, dass auf Grundlage der in der Kupplungseinrichtung auftretenden Schleppmomente eine Fahrzeug-Kriechfunktion bereitgestellt wird. Hierzu kann die Steuereinrichtung 316 eine entsprechende Kriech-Funktionalität aufweisen.

Vorzugsweise ist eine Kompensation der auf die Fahrzeugräder wirkenden Kupplungs-Schleppmomente zu Null oder einem Kriechwert oder einem Berghaltewert (im Fall einer Fahrzeug-Berghaltefunktion) vorgesehen, und zwar beispielsweise vermittels des Fahrzeug-Bremssystems oder/und vermittels einer aufeinander abgestimmten Betätigung der beiden Kupplungsanordnungen in dem Falle, dass auf der der einen Kupplungsanordnung zugeordneten Getriebeeingangswelle ein Vorwärtsgang und auf der der anderen Kupplungsanordnung zugeordneten Getriebeeingangswelle der Rückwärtsgang eingelegt ist. Allgemein gesprochen, kann mittels des Fahrzeug-Bremssystems oder durch entsprechende Betätigung wenigstens einer der Kupplungsanordnungen ein an den Fahrzeugrädern wirksames Antriebsmoment auf Grund von Kupplungs-Schleppmomenten oder/und Kupplungs-Lamellenhaftmomenten zu Null oder einem Sollwert kompensiert werden, indem die Steuereinheit 316 das Fahrzeugbremssystem 454 oder/und die Kupplungseinrichtung 202 bzw. die betreffende Kupplungsanordnung entsprechend ansteuert.

Es wird im Folgenden noch einmal auf den Zustand Bezug genommen, bei dem gleichzeitig ein Vorwärtsgang und gleichzeitig ein Rückwärtsgang eingelegt sind. Vorzugsweise können diese Gänge beim Anfahren und beim anschließenden Fahren des Kraftfahrzeugs eingelegt bleiben, und es kann durch gegenläufige Betätigung der beiden Kupplungsanordnungen zwischen dem Vorwärtsgang und dem Rückwärtsgang gewechselt werden, ohne dass es einer Betätigung des Getriebes bedarf. So lange der Rückwärtsgang eingelegt ist, sollte durch eine Sicherheitsfunktionalität der Steuereinrichtung 316 dafür gesorgt werden, dass eine maximale Fahrzeuggeschwindigkeit nicht überschritten wird. Man kann aber auch ein automatisches Auslegen des Rückwärtsgangs für den Fall vorsehen, dass die Fahrzeuggeschwindigkeit einen Schwellenwert übersteigt.

Die Steuereinrichtung 316 kann vorteilhaft einen Aktiv-Synchronsiermodus aufweisen, in dem durch entsprechende Ansteuerung des Motors (allgemein der Antriebseinheit) oder/und durch entsprechende Betätigung der Kupplungsanordnungen die Drehzahl der dem Zielgang zugeordneten Getriebeeingangswelle dem Synchronverhältnis des Zielgangs zumindest angenähert, vorzugsweise die Drehzahl dieser Getriebeeingangswelle auf das Synchronverhältnis des Zielgangs gebracht wird, um dann das Einlegen des Zielgangs zu erleichtern bzw. zu ermöglichen. Die Schalt- und Synchronsiervorrichtungen werden dann entsprechend geschont, und es bedarf nicht unbedingt des Einsatzes von mehreren Schalt- und Synchronsiervorrichtungen gleichzeitig, und es kann auch auf das Einlegen eines Ganges unter Ausnutzung einer Vorspannung der Betätigungsverbindung zwischen der betreffenden Schalt- und Synchronsiervorrichtung und dem zugeordneten Schaltstellantrieb verzichtet werden. Eine Zugkraftunterbrechung während des Schaltens ist bei diesem Aktiv-Synchronsiermodus in Kauf zu nehmen.

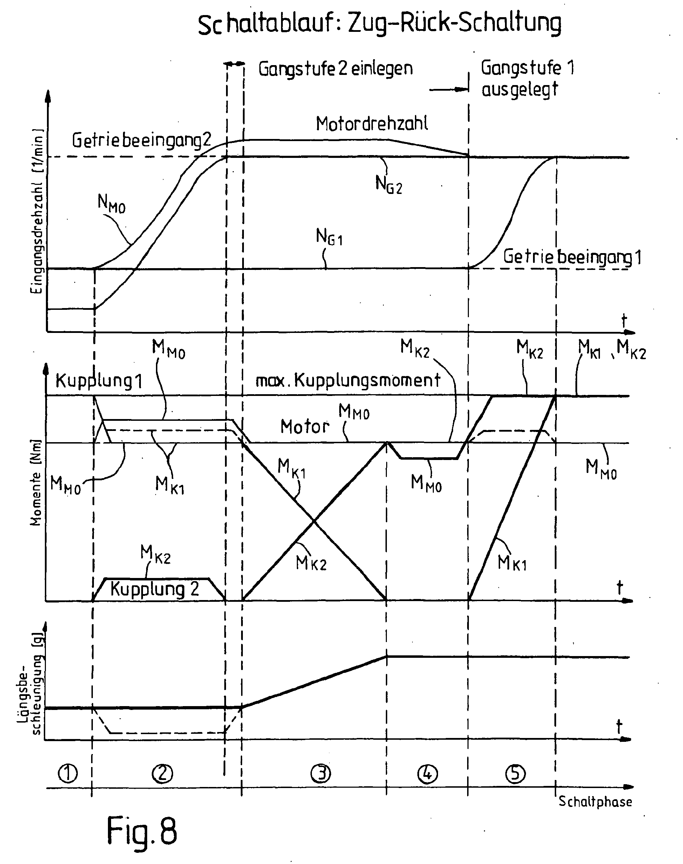

Fig. 8 zeigt ein Beispiel für einen Schaltablauf bei einer Zug-Rückschaltung, der ein zugkaftunterbrechungsfreies Rück-Schalten ermöglicht, ohne dass an den Schalt- und Synchronsiervorrichtungen zur Synchronisierung der dem Zielgang zugeordneten Getriebeeingangswelle übermäßige Reibarbeit geleistet werden muss, selbst bei großen Schleppmomenten in der Kupplunsgeinrichtung.

Der Fig. 8 liegen die folgenden Annahmen und die folgende Nomenklatur zu Grunde:

Es wird auf Getriebeeingangswellen 1 und 2, Kupplungen 1 und 2 und Gänge 1 und 2 Bezug genommen. Die Getriebeeingangswelle 1 kann die Getriebeeingangswelle 406 und die Getriebeeingangswelle 2 kann die Getriebeeingangswelle 408 sein, oder umgekehrt. Dementsprechend kann die Kupplung 1 der Kupplungsanordnung 204 und die Kupplung 2 der Kupplungsanordnung 206 entsprechen, oder umgekehrt. Gang 1 ist ein der Getriebeeingangswelle 1 zugeordneter Gang (der Ausgangsgang) und Gang 2 ist ein der Getriebeeingangswelle 2 zugeordneter Gang (der Zielgang). Es wird in einem Zug-Betriebszustand von einem größeren, der Getriebeeingangswelle 1 zugeordneten Gang 1 zu einem kleineren, der Getriebeeingangswelle 2 zugeordneten Gang 2 geschaltet.

Bei der Schaltungsart Zug-Rück liefert der Motor ein positives Moment an das Getriebe. Dieses Moment wird über die Getriebeeingangswelle 1 übertragen. Die Kupplung 1 ist mit der Getriebeeingangswelle 1 verbunden, die Kupplung 2 ist mit der Getriebeeingangswelle 2 verbunden. Im Ausgangszustand ist die Kupplung 1 vollständig geschlossen und befindet sich somit in Überanpressung. Die Kupplung 2 ist beim gezeigten Beispiel im Ausgangszustand offen. Die Getriebeeingangswelle 1 dreht sich damit im Ausgangszustand mit der Motordrehzahl. Auf der Getriebeeingangswelle 1 ist ein Gang eingelegt, so dass Kraftfluss zwischen der Getriebeeingangswelle 1 und der Getriebeausgangswelle hergestellt ist.

Ein bevorzugter, fünf Schaltphasen umfassender Schaltablauf ist in Fig. 8 schematisch dargestellt. Die Phasen sind in Fig. 8 durch arabische Ziffern 1 bis 5 in Kreisen bezeichnet und werden im Folgenden als Phasen I bis V angesprochen. Mögliche Varianten und Ausgestaltungen der Schaltphasen sind in der Fig. gestrichelt dargestellt. Zur Unterscheidung der verschiedenen Kurven und Kurvenabschnitte sind diese mit den Kennungen $N_{Mo}$ für die Motordrehzahl, $N_{G1}$ für die Drehzahl der Getriebeeingangswelle 1, $N_{G2}$ für die Drehzahl der Getriebeeingangswelle 2, $M_{Mo}$ für das Motormoment, $M_{K1}$ für das Moment der Kupplung 1 und $M_{K2}$ für das Moment der Kupplung 2 versehen. Ein sich aus der positiven Längsbeschleunigung (vgl. unterstes Teildiagramm) des Kraftfahrzeugs ergebender, die Änderung der Fahrzeuggeschwindigkeit repräsentierender zusätzlicher Beitrag zu den Änderungen der Drehzahlen ist in dem Teildiagramm für die Drehzahlen nicht berücksichtigt. Ferner wurde der Einfachheit halber von einem an sich (ohne aktiven Eingriff in die Motorsteuerung) über der Motordrehzahl konstant bleibenden Motormoment ausgegangen. Der Schaltvorgang gerechnet vom Beginn der Schaltphase I bis zum Ende der Schaltphase V könnte beispielsweise etwa 0,5s bis 1 s dauern.

Wäre in Abweichung von den oben gemachten Annahmen und der Darstellung im Diagramm in Fig. 8 die Kupplungsanordnung 2 zu Beginn ebenfalls vollständig geschlossen, so könnte diese zur Einleitung des Schaltvorgangs in Phase I vollständig geöffnet werden.

In Phase II wird das Kupplungsmoment der Kupplung 1, $M_{K1}$, auf das in Phase I gültige Moment des Motors abgesenkt. Das Antriebsmoment des Motors wird vergrößert und die Kupplung 2 wird leicht eingerückt, so dass nun das Motormoment größer als das Moment der Kupplung 1 ist, so dass Kupplungsschlupf auftritt und die Motordrehzahl ansteigt, bis gegen Ende der Phase II eine Drehzahl über der Synchrondrehzahl des Zielgangs 2 erreicht wird. Durch das leichte Einkuppeln der Kupplung 2 wird die Getriebeeingangswelle 2 hoch beschleunigt, so dass sich deren Drehzahl der Synchrondrehzahl des Zielgangs annähert. Am Ende der Phase II wird der Zielgang (Gang 2) eingelegt, so dass unter Mitwirkung der dem Zielgang zugeordneten Synchronsiervorrichtung des Getriebes die Getriebeeingangswelle 2 die Synchrondrehzahl des Zielgangs erreicht und es damit zum Einlegen des Zielgangs kommt.

In Phase III wird nach Erreichen der gewählten Motordrehzahl über der Drehzahl der Getriebeeingangswelle 2 das Motormoment wieder auf das ursprüngliche Moment abgesenkt, um ein weiteres Ansteigen der Motordrehzahl zu verhindern. Die Kupplung 1 befindet sich im Schlupf und eine gewählte Schlupfdrehzahl zwischen der Getriebeeingangswelle 1 und der Motordrehzahl wird vermittels der Kupplung 1 eingeregelt. Die Kupplung 2 wird gesteuert geschlossen. Dadurch wird ein geregeltes Öffnen der Kupplung 1 ausgelöst, da die vorher gewählte Schlupfdrehzahl nur konstant gehalten werden kann, wenn die Summe der Momente, die von den beiden Kupplungen auf die Getriebeeingangswellen und damit - unter Vermittlung des Getriebes - auf die Getriebeausgangswelle übertragen wird, konstant gleich dem gewählten Motormoment ist. Die Kupplung 2 übernimmt immer mehr Motormoment, bis die Kupplung 1 vollständig geöffnet ist. Die Kupplung 2 kann jetzt das komplette Motormoment übertragen und wird nicht weiter geschlossen. An Stelle eines gesteuerten Schließens der Kupplung 2 und eines geregelten Öffnens der Kupplung 1 könnte man auch ein gesteuertes Öffnen der Kupplung 1 und ein geregeltes Schließen der Kupplung 2 vorsehen.

In Phase IV wird durch ein Absenken des Motormoments unter das Kupplungsmoment die Motordrehzahl auf die Drehzahl der Getriebeeingangswelle 2 heruntergezogen. In Phase V wird dann die Kupplung II vollständig geschlossen. Die Kupplung 1 kann ebenfalls geschlossen werden, was zum Ansteigen der Drehzahl $N_{G1}$ der Getriebeeingangswelle 1 auf das Niveau der Getriebeeingangswelle 2 führt. Das Motormoment wurde beim Schaltablauf gemäß Diagramm schon am Ende der Phase IV auf den ursprünglichen Wert zurückgeführt.

In Phase II ist noch eine Variante gezeigt, nach der das Moment der Kupplung 1 nicht ganz auf den Wert des anfänglichen Motormoments reduziert wird, um einen unerwünschten negativen Zwischenbeschleunigungsvorgang des Fahrzeugs auf Grund der Beschleunigung der Getriebeeingangswelle 2 zu vermeiden. Ferner kann man in Phase V das Motormoment auf einen Wert über den ursprünglichen Wert erhöhen, um die für die Beschleunigung der Getriebeeingangswelle 1 benötigte Beschleunigungsenergie zu kompensieren.

Man kann erreichen, dass der gesamte Beschleunigungsverlauf während des Kuppelvorgangs monoton ohne Zwischenverzögerungs- oder Zwischenbeschleunigungsvorgänge verläuft, indem zu jeder Zeit das anfängliche Motormoment vermittels der Getriebeeingangswellen ins Getriebe eingeleitet und entsprechend den Getriebeübersetzungen im Ausgangs- und Zielgang zur Getriebeausgangswelle übertragen wird. An der Getriebeausgangswelle wird demenstprechend zu jeder Zeit ein im Wesentlichen konstant bleibendes (Phasen I, II, IV, V) bzw. monoton (vorzugsweise streng monoton, z.B. linear) steigendes (Phase III) Antriebsmoment.

Gemäß einem Schaltablauf, wie in Fig. 8 beispielhaft vorgeschlagen, ist selbst bei tiefen Temperaturen bzw. zähflüssigem Kühlöl ein Rückschalten ohne nennenswerte Belastung der Synchronisiervorrichtungen möglich, ohne dass auf das Lastschalten ohne Zugkraftunterbrechung verzichten zu müssen.

Beim Hochschalten liegt das dem Zielgang zugeordneten Getriebeeingangswellen-Synchrondrehzahlniveau unter dem des alten Gangs. Ist die dem Zielgang zugeordnete Kupplung offen, so kann vermittels einer gesonderten Abbremseinrichtung oder/und auf Grund von Schleppmomenten des Getriebes die Drehzahl der dem Zielgang zugeordneten Getriebeeingangswelle zwischen Null und der neuen Synchrondrehzahl liegen. Man kann dann durch Schließen der dem Zielgang zugeordneten Kupplung die dem Zielgang zugeordnete Getriebeeingangswelle auf die neue Synchrondrehzahl bringen, um ein Gangeinlegen zu ermöglichen bzw. zu erleichtern. Auf das Lastschalten ohne Zugkraftunterbrechung braucht dabei nicht verzichtet werden.

Die vorstehenden, auf die Beherrschung der Probleme im Zusammenhang mit Schleppmomenten in der Kupplungseinrichtung bei tiefen Temperaturen zielenden Maßnahmen sind bei normalen Betriebsbedingungen nicht unbedingt mehr erforderlich. Es kann deshalb vorgesehen sein, dass die Steuereinrichtung 316 selbsttätig einen normalen Schalt- und Kupplungsbetrieb mit freier Gangwahl freigibt. Hierzu kann die Steuereinrichtung von einem beispielsweise die Temperatur des Kühlöls messenden Temperatursensor ein Temperatursignal erhalten und dieses mit einem Schwellenwert vergleichen. Ggf. kann aus der gemessenen Temperatur die Viskosität des Kühlöls bestimmt werden und diese mit einem vorgegebenen Schwellenwert verglichen werden. Die Steuereinrichtung kann auch dafür vorgesehen sein, aus anderen Messwerten, ggf. Temperaturwerten, auf die für die Schleppmomente maßgebliche Temperatur zu schließen, beispielsweise unter Zugrundelegung eines Temperaturmodels.

Zur aktiven Reduktion der Schleppmomente kann die Steuereinrichtung 316 eine Funktionalität aufweisen, die dazu dient, die Pumpe 209 (vgl. Fig. 2) so anzusteuern, dass nur so viel Kühlöl den Kupplungsanordnungen zugeführt wird, wie momentan erforderlich ist, etwa im Hinblick auf eine in der Kupplungseinrichtung auftretende Verlustleistung oder/und im Hinblick auf einen Schmierbedarf an den Lamellen. Ggf. kann der Kühlölfluss zu den Kupplungsanordnungen auch vollständig unterbrochen werden, wenn momentan kein Zufuhrbedarf besteht.

Man kann auch vorsehen, dass die Steuereinrichtung dafür ausgelegt ist, ein Starten des Motors nur dann freizugeben, wenn die Viskosität des Kühlöls einen maximalen Wert nicht überschreitet bzw. die Temperatur des Kühlöls nicht unter einem kritischen Wert liegt. Diese Maßnahme ist insbesondere im Zusammenhang mit hier angesprochenen Maßnahmen von Interesse, die eine Erwärmung des Kühlöls unabhängig vom Laufen des Motors ermöglichen (vgl. Heizungen 322, 324 und der Umwälzmodus im Zusammenhang mit dem Ventil 232). Man kann auch vorsehen, dass das Abstellen des Kraftfahrzeugs so vorbereitet wird, dass bei der Wiederinbetriebnahme des Kraftfahrzeugs die in der Kupplungseinrichtung auftretenden Schleppmomente und Losbrechmomente minimiert und im Idealfall sogar weitgehend vermieden werden. So kann die Steuereinrichtung dafür ausgebildet sein, ein bevorstehendes Abstellen des Kraftfahrzeugs bzw. ein Abstellen desselben zu erkennen (die Steuereinrichtung kann hierzu beispielsweise auf eine Verstellung des Schalthebels 452 in die Stellung P ansprechen), und in Reaktion hierauf beim Abstellen nach Ausrücken der Kupplungsanordnungen für eine gewisse Zeit einen überhöhten Kühlöldruck bzw. einen überhöhten Kühlölfluss zu den Kupplungsanordnungen einzustellen, um die Lamellen der Kupplungsanordnungen auseinander zu drücken, die Außenlamellen und die Innenlamellen also voneinander zu trennen. Dies erfolgt vorzugsweise völlig automatisch durch entsprechende Ansteuerung der Pumpe 209 durch die Steuereinrichtung 316. Alternativ oder zusätzlich hierzu kann in Reaktion auf das Erkennen eines bevorstehenden Abstellens des Kraftfahrzeugs bzw. des Abstellens selbst nach Ausrücken der Kupplungsanordnungen die Antriebseinheit durch die Steuereinrichtung 316 derart angesteuert werden, dass die Antriebseinheit für eine gewisse Zeit bei einer gegenüber der Leerlaufdrehzahl deutlich erhöhten Drehzahl läuft, so dass durch Fliehkraftwirkung das Kühlöl aus den Lamellenpaketen nach radial außen weggeschleudert wird. Hierzu wird vorzugsweise zuvor der Kühlölfluss zu den Lamellenpaketen unterbrochen.

Der Betrieb der Antriebseinheit bei ausgerückten Kupplungsanordnungen mit einer gegenüber der Leerlaufdrehzahl deutlich erhöhten Drehzahl ist auch zur Vorbereitung eines Einlegens wenigstens eines Getriebegangs vorteilhaft, da die Schleppmomente um so kleiner sein werden, je weniger Kühlöl sich zwischen den Lamellen befindet. Die Steuereinrichtung 316 ist vorzugsweise deshalb auch dafür ausgelegt, das Einlegen eines Ganges bzw. den Wunsch, dass ein Gang eingelegt werden soll, zu erkennen und die Antriebseinheit bei ausgerückten Kupplungsanordnungen entsprechend anzusteuern. Beispielsweise kann die Steuereinrichtung 316 auf ein Verstellen des Schalthebels 452 in die Stellung R bzw. D ansprechen und erst nach dem vorgeschlagenen Hochdrehen der Antriebseinheit den betreffenden Gang tatsächlich einzulegen.

Es hat sich gezeigt, dass auch durch die Betätigung der Kupplungsanordnungen selbst ein Lösen von aneinander klebenden Lamellen erreicht werden kann bzw. dieses Lösen zumindest unterstützt werden kann. Dieser nützliche Effekt ist auf im Zuge der Kupplungsbetätigung auftretende mechanische Verspannung der Kupplungsanordnungen und die Verschiebung der Lamellen bei der Betätigung zurückzuführen. Die Steuereinrichtung 316 ist vorzugsweise dafür ausgelegt, auf den Gangeinlegewunsch bzw. das Einlegen des Ganges anzusprechen und vor dem Einlegen des Ganges bzw. vor Abschluss des Einlegevorgangs die Kupplungsanordnungen wenigstens einmal, vorzugsweise mehrmals aufeinander folgend im Ein- und Ausrücksinn zu betätigen, um den angesprochenen hilfreichen Effekt zu erzielen.

Es hat sich ferner gezeigt, dass auch auf die Kupplungseinrichtung wirkende Drehzahlungleichförmigkeiten, wie etwa Drehschwingungen, ein Lösen von aneinander anhaftenden Lamellen bewirken oder zumindest unterstützen. Die Steuereinrichtung 316 ist deshalb vorzugsweise dafür ausgelegt, die Antriebseinheit, insbesondere die Brennkraftmaschine, derart anzusteuern, dass bei laufender Antriebseinheit derartige Drehzahlungleichförmigkeiten auftreten. Beispielsweise können bei einem Verbrennungsmotor Zylinder abgeschaltet oder Zylinder abwechselnd oder uneinheitlich mit Kraftstoff versorgt werden.

Es werden unter anderem Maßnahmen zur Beherrschung bzw. Verringerung von in einer Lamellen-Mehrfach-Kupplungseinrichtung auftretenden Schleppmomenten auf Grund temperaturbedingter erhöhter Viskosität bzw. Zähigkeit einer den Lamellen in Betrieb zugeführten Betriebsflüssigkeit vorgeschlagen, um eine Inbetriebnahme eines Kraftfahrzeugs bzw. den Betrieb des Kraftfahrzeugs auch bei tiefen Temperaturen zu ermöglichen.

**Patentansprüche**

1. Kraftfahrzeug, umfassend einen Antriebsstrang, der aufweist: eine Antriebseinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung (236; 414) und eine die Aktuator-Anordnung ansteuernde Steuereinrichtung (316) zugeordnet ist, unter deren Vermittlung der ersten und der zweiten Getriebeeingangswelle zugeordnete Getriebegänge ein- und auslegbar sind, wobei das Getriebe den Getriebegängen zugeordnete Schaltelemente (412) und diesen zugeordnete oder zugehörige Synchronelemente (412) aufweist, wobei zum Einlegen eines Gangs-im Folgenden als Zielgang bezeichnet-wenigstens ein dem Zielgang zugeordnetes Synchronelement vermittels der Aktuator-Anordnung (414) aktivierbar ist, um wenigstens eine dem Zielgang zugeordnete Getriebewelle, insbesondere die dem Zielgang zugeordnete Getriebeeingangswelle, zu synchronisieren, **dadurch gekennzeichnet, dass** zum Einlegen des Zielgangs zusätzlich wenigstens ein wenigstens einem anderen Gang zugeordnetes Synchronelement (412) vermittels der Aktuator-Anordnung (414) aktivierbar ist, um die dem Zielgang zugeordnete Getriebewelle zu synchronisieren.

2. Kraftfahrzeug nach Anspruch 1, **gekennzeichnet durch** eine Sicherheitsfunktionalität (316), die ein unbeabsichtigtes Einlegen des anderen Gangs verhindert.

3. Kraftfahrzeug nach Anspruch 2, **dadurch gekennzeichnet, dass** die Steuereinrichtung (316) dafür ausgelegt ist, auf Grundlage von erfassten Drehzahlen eine Annäherung an einen dem anderen Gang zugeordneten Synchronpunkt zu erkennen und vor Erreichen des Synchronpunktes auf wenigstens ein dem anderen Gang zugeordnetes Schaltelement (412) oder/und Synchronelement (412) wirkende Aktivierungskräfte aufzuheben oder zu reduzieren, um ein Einlegen des anderen Gangs zu verhindern.

4. Kraftfahrzeug nach einem der Ansprüche 1 bis 3, **dadurch gekennzeichnet, dass** die Steuereinrichtung (316) dafür ausgelegt ist, vermittels der Aktuator-Anordnung (414) das wenigstens eine dem wenigstens einen anderen Gang zugeordnete Synchronelement (412) bedarfsweise dann zu aktivieren, wenn wenigstens eine Positiv-Bedingung erfüllt oder/und wenigstens eine Negativ-Bedingung nicht erfüllt ist.

5. Kraftfahrzeug, umfassend einen Antriebsstrang, der aufweist: eine Antriebseinheit (238), ein Lastschaltgetriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung (236; 414) und eine die Aktuator-Anordnung ansteuernde Steuereinrichtung (316) zugeordnet ist, unter deren Vermittlung der ersten und der zweiten Getriebeeingangswelle zugeordnete Getriebegänge ein- und auslegbar sind, wobei die Steuereinrichtung ferner eine der Kupplungseinrichtung zugeordnete oder zugehörige, vorzugsweise hydraulische Betätigungseinrichtung (234) ansteuert, um die Kupplungsanordnungen im Einrück- und Ausrücksinne zu betätigen, wobei die Steuereinrichtung (316) dafür ausgelegt ist, in einem Lastschaltmodus in einem Getriebezustand, in dem ein der einen Getriebeeingangswelle zugeordneter Ausgangsgang und ein der anderen Getriebeeingangswelle zugeordneter Zielgang eingelegt sind, die Kupplungsanordnungen (204, 206) vermittels der Betätigungseinrichtung (234) gegenläufig zu betätigen, um ein Antriebsmoment der Antriebseinheit von der einen zur anderen Getriebeeingangswelle kontinuierlich und ohne Zugkraftunterbrechung zu verlagern und so den Ausgangsgang als momentenübertragender Gang zu deaktivieren und den Zielgang als momentenübertragender Gang zu aktivieren,

**dadurch gekennzeichnet,**

**dass** ein Aktiv-Synchronisierungsmodus vorgesehen ist, in dem zur Deaktivierung des Ausgangsgangs als momentenübertragender Gang und Aktivierung des Zielgang als momentenübertragender Gangs zuerst der Ausgangsgang ausgelegt wird oder/und die dem Ausgangsgang zugeordnete Kupplungsanordnung geöffnet wird, dann die Drehzahl der Antriebseinheit und die Drehzahl der dem Zielgang zugeordneten Getriebeeingangswelle auf das Synchronverhältnis des Zielgangs gebracht wird und dann der Zielgang eingelegt wird.

6. Fahrzeug nach Anspruch 5, **dadurch gekennzeichnet, dass** im Aktiv-Synchronisierungsmodus die Drehzahl der Antriebseinheit und die Drehzahl der dem Zielgang zugeordneten Getriebeeingangswelle **dadurch** gemeinsam auf das Synchronverhältnis des Zielgangs gebracht werden, dass beim Bringen der Drehzahl der Antriebseinheit auf das Synchronverhältnis die dem Zielgang zugeordnete Kupplungsanordnung zumindest teilweise eingerückt ist.

7. Fahrzeug nach Anspruch 5, **dadurch gekennzeichnet, dass** im Aktiv-Synchronisierungsmodus nach Bringen der Drehzahl der Antriebseinheit auf das Synchronverhältnis die Drehzahl der dem Zielgang zugeordneten Getriebeeingangswelle auf das Synchronverhältnis durch zumindest teilweises Einrücken der dem Zielgang zugeordnete Kupplungsanordnung gebracht wird.

8. Fahrzeug nach einem der Ansprüche 5 bis 7, **dadurch gekennzeichnet, dass** der Aktiv-Synchronisierungsmodus betreffend ein Hochschalten nur dann freigegeben wird, wenn eine momentane Fahrzeuggeschwindigkeit bezogen auf den Zielgang einer Mindest-Leerlaufdrehzahl der Antriebseinheit entspricht oder diese übersteigt.

9. Kraftfahrzeug, umfassend einen Antriebsstrang, der aufweist: eine Antriebseinheit (238), ein Lastschaltgetriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung (236, 414) und eine die Aktuator-Anordnung ansteuernde Steuereinrichtung (316) zugeordnet ist, unter deren Vermittlung der ersten und der zweiten Getriebeeingangswelle zugeordnete Getriebegänge ein- und auslegbar sind, wobei die Steuereinrichtung ferner eine der Kupplungseinrichtung zugeordnete oder zugehörige, vorzugsweise hydraulische Betätigungseinrichtung (234) ansteuert, um die Kupplungsanordnungen im Einrück- und Ausrücksinne zu betätigen, wobei die Steuereinrichtung (316) dafür ausgelegt ist, in einem Lastschaltmodus in einem Getriebezustand, in dem ein der einen Getriebeeingangswelle zugeordneter Ausgangsgang und ein der anderen Getriebeeingangswelle zugeordneter Zielgang eingelegt sind, die Kupplungsanordnungen (204, 206) vermittels der Betätigungseinrichtung (234) gegenläufig zu betätigen, um ein Antriebsmoment der Antriebseinheit von der einen zur anderen Getriebeeingangswelle kontinuierlich und ohne Zugkraftunterbrechung zu verlagern und so den Ausgangsgang als momentenübertragender Gang zu deaktivieren und den Zielgang als momentenübertragender Gang zu aktivieren,

**dadurch gekennzeichnet,**

**dass** die Steuereinrichtung (316) dafür ausgelegt ist, beim Wechsel von einem höheren Ausgangsgang zu einem niedrigeren Zielgang , also bei einer Rückschaltung, in Vorbereitung eines Einlegens des Zielgangs auf die Antriebseinheit einzuwirken, dass deren Antriebsmoment über ein von der dem Ausgangsgang zugeordneten Kupplungsanordnung übertragbares Moment ansteigt, so dass die Drehzahl der Antriebseinheit über die momentane Drehzahl der dem Ausgangsgang zugeordneten Getriebeeingangswelle ansteigt und sich einer von der momentanen Fahrzeuggeschwindigkeit abhängigen Synchrondrehzahl für den Zielgang zumindest annähert und diese vorzugsweise zumindest näherungsweise erreicht und dass die Steuereinrichtung (316) dafür ausgelegt ist, im Zuge mit der Vergrößerung des Antriebsmoments bzw. der Beschleunigung der dem Zielgang zugeordnete Getriebeeingangswelle oder danach die Aktuator-Anordnung (236; 414) derart anzusteuern, dass diese im Sinne eines Einlegens des Zielgangs auf das Getriebe wirkt.

10. Kraftfahrzeug nach Anspruch 9, **dadurch gekenn-**

zeichnet, dass die Steuereinrichtung (316) dafür ausgelegt ist, gleichzeitig mit der Vergrößerung des Antriebsmoments oder danach die dem Zielgang zugeordnete Kupplungsanordnung im Einrücksinne zu betätigen, um die dem Zielgang zugeordnete Getriebeeingangswelle in Richtung einer Annäherung an die Synchrondrehzahl zu beschleunigen und vorzugsweise zumindest näherungsweise auf die Synchrondrehzahl zu bringen.

11. Kraftfahrzeug, umfassend einen Antriebsstrang, der aufweist: eine Antriebseinheit (238), ein Lastschaltgetriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit zuführbar ist, wobei dem Getriebe eine Aktuator-Anordnung (236; 414) und eine die Aktuator-Anordnung ansteuernde Steuereinrichtung (316) zugeordnet ist, unter deren Vermittlung der ersten und der zweiten Getriebeeingangswelle zugeordnete Getriebegänge ein- und auslegbar sind, wobei die Steuereinrichtung ferner eine der Kupplungseinrichtung zugeordnete oder zugehörige, vorzugsweise hydraulische Betätigungseinrichtung (234) ansteuert, um die Kupplungsanordnungen im Einrück- und Ausrücksinne zu betätigen, wobei die Steuereinrichtung (316) dafür ausgelegt ist, in einem Lastschaltmodus in einem Getriebezustand, in dem ein der einen Getriebeeingangswelle zugeordneter Ausgangsgang und ein der anderen Getriebeeingangswelle zugeordneter Zielgang eingelegt sind, die Kupplungsanordnungen (204, 206) vermittels der Betätigungseinrichtung (234) gegenläufig zu betätigen, um ein Antriebsmoment der Antriebseinheit von der einen zur anderen Getriebeeingangswelle kontinuierlich und ohne Zugkraftunterbrechung zu verlagern und so den Ausgangsgang als momentenübertragender Gang zu deaktivieren und den Zielgang als momentenübertragender Gang zu aktivieren, und wobei die Steuereinrichtung (316) dafür ausgelegt ist, beim Wechsel von einem niedrigeren Ausgangsgang zu einem höheren Zielgang, also bei einer Hochschaltung, in Vorbereitung eines Einlegens des Zielgangs die dem Zielgang zugeordnete Kupplungsanordnung ausgehend von einem ausgerückten Zustand soweit im Einrücksinn zu betätigen, dass die dem Zielgang zugeordnete, bisher sich durch Einwirkung von Getriebeschleppmomenten oder/und Abbremsmomenten höchstens mit einer gegenüber der Synchrondrehzahl für den Zielgang geringeren Drehzahl drehende Getriebeeingangswelle in Richtung einer Annäherung an die Synchrondrehzahl beschleunigt wird und diese vorzugsweise zumindest näherungsweise erreicht,
dadurch gekennzeichnet,
dass die Steuereinrichtung (316) eine effektive Temperatur der Betriebsflüssigkeit, die durch eine Sensoranordnung erfasst wird oder/und durch die Steuereinrichtung bestimmt wird, auswertet, und in Abhängigkeit von dieser Auswertung einen normalen Schalt- und Kupplungsbetrieb mit freier Gangwahl oder/und Schalten ohne Zugkraftunterbrechung freigibt und sperrt

12. Kraftfahrzeug nach Anspruch 11, dadurch gekennzeichnet, dass die Steuereinrichtung (316) dafür ausgelegt ist, im Zuge mit der Beschleunigung der dem Zielgang zugeordnete Getriebeeingangswelle oder danach die Aktuator-Anordnung (236; 414) derart anzusteuern, dass diese zur Vorbereitung der gegenläufigen Betätigung der Kupplungsanordnungen im Sinne eines Einlegens des Zielgangs auf das Getriebe wirkt.

13. Kraftfahrzeug nach Anspruch 13, dass die Steuereinrichtung (316) den normalen Schalt- und Kupplungsbetrieb dann,freigibt, wenn die effektive Temperatur einen Schwellenwert übersteigt oder eine aus der effektiven Temperatur bestimmte Viskosität der Betriebsflüssigkeit unter einen Schwellenwert gefallen ist.

14. Kraftfahrzeug nach Anspruch 13 oder 14, dadurch gekennzeichnet, dass die Steuereinrichtung (316) dafür ausgelegt ist, aus wenigstens einem mittels einer Sensoranordnung bestimmten Temperaturwert, der nicht direkt die effektive Temperatur der Betriebsflüssigkeit angibt, oder/und aus wenigstens einem Betriebsparameter des Antriebsstrangs die effektive Temperatur der Betriebsflüssigkeit zu bestimmen, wobei gegebenenfalls mehrere zu verschiedenen Zeiten protokollierte Temperaturwerte bzw. Betriebsparameter oder/und ein beispielsweise mathematisch oder/und durch Kennfelder definiertes Temperaturmodell der Bestimmung zugrundegelegt werden.

## Claims

1. Motor vehicle, comprising a drive train which has: a drive unit (238), a gearbox (330) having a first gearbox input shaft and a second gearbox input shaft, and a clutch device (202) having a first clutch arrangement, assigned to the first gearbox input shaft, and a second clutch arrangement, assigned to the second gearbox input shaft, for the torque transmission between the drive unit and the gearbox, wherein the clutch arrangements are realized as multidisc clutch arrangements (204, 206), to which an operating fluid, in particular a cooling oil, can be fed for an operation under the influence of the operating fluid, wherein the gearbox is assigned an actuator arrangement (236; 414) and a control device (316) controlling the actuator arrangement, by means of which gears assigned to the first and the second gearbox input shaft can be engaged and disengaged, wherein the gearbox has gearshift elements (412) assigned to the gears and synchronizing elements (412) assigned to or associated with said gearshift elements, wherein, for the engagement of a gear - hereinafter referred to as the target gear - at least one synchronizing element assigned to the target gear is able to be activated by means of the actuator arrangement (414) in order to synchronize at least one gearbox shaft assigned to the target gear, in particular the gearbox input shaft assigned to the target gear, **characterized in that**, for the engagement of the target gear, at least one synchronizing element (412) assigned to at least one other gear can be activated by means of the actuator arrangement (414) in order to synchronize the gearbox shaft assigned to the target gear.

2. Motor vehicle according to Claim 1, **characterized by** a safety functionality (316) which prevents the other gear from being unintentionally engaged.

3. Motor vehicle according to Claim 2, **characterized in that** the control device (316) is designed to detect, on the basis of registered rotation speeds, an approach to a synchronizing point assigned to the other gear and, before the synchronizing point is reached, to eliminate or reduce activating forces acting upon at least one gearshift element (412) and/or synchronizing element (412) to prevent the other gear from being engaged.

4. Motor vehicle according to one of Claims 1 to 3, **characterized in that** the control device (316) is designed to activate according to requirement, by means of the actuator arrangement (414), at least one synchronizing element (412) assigned to the at least one other gear, when at least one positive condition is met and/or at least one negative condition is not met.

5. Motor vehicle, comprising a drive train which has: a drive unit (238), a power-shift gearbox (330) having a first gearbox input shaft and a second gearbox input shaft, and a clutch device (202) having a first clutch arrangement, assigned to the first gearbox input shaft, and a second clutch arrangement, assigned to the second gearbox input shaft, for the torque transmission between the drive unit and the gearbox, wherein the clutch arrangements are realized as multidisc clutch arrangements (204, 206), to which an operating fluid, in particular a cooling oil, can be fed for an operation under the influence of the operating fluid, wherein the gearbox is assigned an actuator arrangement (236; 414) and a control device (316) controlling the actuator arrangement, by means of which gears assigned to the first and the second gearbox input shaft can be engaged and disengaged, the control device further controlling a preferably hydraulic actuating device (234), assigned to or associated with the clutch device, in order to actuate the clutch arrangements for clutching and declutching purposes, wherein the control device (316) is designed, in a power-shift mode in a gearbox state in which a starting gear assigned to one gearbox input shaft and a target gear assigned to the other gearbox input shaft are engaged, to actuate the clutch arrangements (204, 206) by means of the actuating device (234) in opposite-working directions in order to transfer a drive torque of the drive unit, continuously and without interruption of the tensile force, from one to the other gearbox input shaft and thus to deactivate the starting gear as the torque-transmitting gear and activate the target gear as the torque-transmitting gear, **characterized in that** an active synchronization mode is provided, in which, for the deactivation of the starting gear as the torque-transmitting gear and activation of the target gear as the torque-transmitting gear, first the starting gear is disengaged and/or the clutch arrangement assigned to the starting gear is opened, and then the rotation speed of the drive unit and the rotation speed of the gearbox input shaft assigned to the target gear are brought to the synchronization ratio of the target gear and the target gear is then engaged.

6. Motor vehicle according to Claim 5, **characterized in that**, in the active-synchronization mode, the rotation speed of the drive unit and the rotation speed of the gearbox input shaft assigned to the target gear are jointly brought to the synchronization ratio of the target gear by virtue of the fact that, when the rotation speed of the drive unit is brought to the synchronization ratio, the clutch arrangement assigned to the target gear is at least partially engaged.

7. Motor vehicle according to Claim 5, **characterized in that**, in the active-synchronization mode, after the rotation speed of the drive unit has been brought to the synchronization ratio, the rotation speed of the gearbox input shaft assigned to the target gear is brought to the synchronization ratio by at least partial engagement of the clutch arrangement assigned to the target gear.

8. Motor vehicle according to one of Claims 5 to 7, **characterized in that** the active-synchronization mode relating to an upshift is only released when an instantaneous vehicle speed, related to the target gear, corresponds to a minimum idling speed of the drive unit or exceeds this.

9. Motor vehicle, comprising a drive train which has: a drive unit (238), a power-shift gearbox (330) having a first gearbox input shaft and a second gearbox input shaft, and a clutch device (202) having a first clutch arrangement, assigned to the first gearbox input shaft, and a second clutch arrangement, assigned to the second gearbox input shaft, for the torque transmission between the drive unit and the gearbox,
wherein the clutch arrangements are realized as multidisc clutch arrangements (204, 206), to which an operating fluid, in particular a cooling oil, can be fed for an operation under the influence of the operating fluid,
wherein the gearbox is assigned an actuator arrangement (236; 414) and a control device (316) controlling the actuator arrangement, by means of which gears assigned to the first and the second gearbox input shaft can be engaged and disengaged, the control device further controlling a preferably hydraulic actuating device (234), assigned to or associated with the clutch device, in order to actuate the clutch arrangements for clutching or declutching purposes,
wherein the control device (316) is designed, in a power-shift mode in a gearbox state in which a starting gear assigned to one gearbox input shaft and a target gear assigned to the other gearbox input shaft are engaged, to actuate the clutch arrangements (204, 206) by means of the actuating device (234) in opposite-working directions in order to transfer a drive torque of the drive unit, continuously and without interruption of the tensile force, from one to the other gearbox input shaft and thus to deactivate the starting gear as the torque-transmitting gear and activate the target gear as the torque-transmitting gear, **characterized in that**
the control device (316) is designed, when a change is made from a higher starting gear to a lower target gear, i.e. in a downshift, in preparation for an engagement of the target gear, to act upon the drive unit, **in that** the drive torque thereof rises above a torque transferable by the clutch arrangement assigned to the starting gear, so that the rotation speed of the drive unit rises above the instantaneous rotation speed of the gearbox input shaft assigned to the starting gear and at least approaches a synchronization speed for the target gear which is dependent on the instantaneous vehicle speed, and preferably at least approximately reaches this, and **in that** the control device (316) is designed to control the actuator arrangement (236; 414), hand in hand with the increase in the drive torque or with the acceleration of the gearbox input shaft assigned to the target gear, or thereafter, such that said actuator arrangement acts upon the gearbox for the purpose of engaging the target gear.

10. Motor vehicle according to Claim 9, **characterized in that** the control device (316) is designed, simultaneously with the enlargement of the drive torque, or thereafter, to actuate the clutch arrangement assigned to the target gear for clutching purposes in order to accelerate the gearbox input shaft assigned to the target gear in the direction of an approach to the synchronization speed and preferably bring it at least approximately to the synchronization speed.

11. Motor vehicle, comprising a drive train which has: a drive unit (238), a power-shift gearbox (330) having a first gearbox input shaft and a second gearbox input shaft, and a clutch device (202) having a first clutch arrangement, assigned to the first gearbox input shaft, and a second clutch arrangement, assigned to the second gearbox input shaft, for the torque transmission between the drive unit and the gearbox,
wherein the clutch arrangements are realized as multidisc clutch arrangements (204, 206), to which an operating fluid, in particular a cooling oil, can be fed for an operation under the influence of the operating fluid,
wherein the gearbox is assigned an actuator arrangement (236; 414) and a control device (316) controlling the actuator arrangement, by means of which gears assigned to the first and the second gearbox input shaft can be engaged and disengaged, the control device further controlling a preferably hydraulic actuating device (234), assigned to or associated with the clutch device, in order to actuate the clutch arrangements for clutching and declutching purposes,
wherein the control device (316) is designed, in a power-shift mode in a gearbox state in which a starting gear assigned to one gearbox input shaft and a target gear assigned to the other gearbox input shaft are engaged, to actuate the clutch arrangements (204, 206) by means of the actuating device (234) in opposite-working directions in order to transfer a drive torque of the drive unit, continuously and without interruption of the tensile force, from one to the other gearbox input shaft and thus to deactivate the starting gear as the torque-transmitting gear and activate the target gear as the torque-transmitting gear, and wherein the control device (316) is designed, when a change is made from a lower starting gear to a higher target gear, i.e. in an upshift, in preparation for an engagement of the target gear, to actuate the clutch arrangement assigned to the target gear, starting from a declutched state, sufficiently far in the clutching direction that the gearbox input shaft which is assigned to the target gear and has hitherto rotated, through the influence of gearbox drag torques and/or braking torques, at most at a lower rotation speed than the synchronization speed for the target gear, is accelerated in the direction of an approach to the synchronization speed and preferably at least approximately reaches this,
**characterized in that**
the control device (316) evaluates an effective temperature of the operating fluid, which is registered by a sensor arrangement and/or is determined by the control device, and, in dependence on this evaluation, releases and shuts off a normal gearshift and clutch operation with free gear selection and/or gearshift, without interruption of the tensile force.

**12.** Motor vehicle according to Claim 11, **characterized in that** the control device (316) is designed, hand in hand with the acceleration of the gearbox input shaft assigned to the target gear, or thereafter, to control the actuator arrangement (236; 414) such that this, in preparation for the opposite-working actuation of the clutch arrangements for the purpose of an engagement of the target gear, acts upon the gearbox.

**13.** Motor vehicle according to Claim 13, **characterized in that** the control device (316) releases the normal gearshift and clutch operation when the effective temperature exceeds a threshold value, or a viscosity of the operating fluid, determined from the effective temperature, has fallen below a threshold value.

**14.** Motor vehicle according to Claim 13 or 14, **characterized in that** the control device (316) is designed, from at least one temperature value determined by means of a sensor arrangement, which temperature value does not directly indicate the effective temperature of the operating fluid, and/or from at least one operating parameter of the drive train, to determine the effective temperature of the operating fluid, this determination being based, where appropriate, on a plurality of temperature values or operating parameters recorded at different times and/or a temperature model defined, for example, mathematically and/or by characteristic diagrams.

**Revendications**

**1.** Véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses, sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service,
sachant qu'un ensemble d'actionneur (236 ; 414) et un dispositif de commande (316) commandant l'ensemble d'actionneur, par l'intermédiaire desquels des rapports de boîte associés au premier et au deuxième arbres d'entrée de boîte peuvent être engagés et désengagés, sont associés à la boîte de vitesses,
sachant que la boîte de vitesses présente des éléments de sélection (412) associés aux rapports de boîte et des éléments de synchronisation (412) associés ou correspondant à ces derniers, sachant que pour engager un rapport - appelé dans la suite rapport cible -, au moins un élément de synchronisation associé au rapport cible peut être activé au moyen de l'ensemble d'actionneur (414) pour synchroniser au moins un arbre de boîte associé au rapport cible, notamment l'arbre d'entrée de boîte associé au rapport cible,
**caractérisé en ce que**, afin d'engager le rapport cible, au moins un élément de synchronisation (412) associé à au moins un autre rapport peut être en outre activé au moyen de l'ensemble d'actionneur (414) pour synchroniser l'arbre de boîte associé au rapport cible.

**2.** Véhicule selon la revendication 1, **caractérisé par** une fonctionnalité de sécurité (316) qui empêche l'engagement non intentionnel de l'autre rapport.

**3.** Véhicule selon la revendication 2, **caractérisé en ce que** le dispositif de commande (316) est conçu pour identifier sur la base de vitesses de rotation détectées l'approche d'un point de synchronisation associé à l'autre rapport, et pour supprimer ou réduire avant l'atteinte du point de synchronisation les forces d'activation agissant sur au moins un élément de sélection (412) et/ou un élément de synchronisation (412) associé à l'autre rapport, afin d'empêcher l'engagement de l'autre rapport.

**4.** Véhicule selon l'une quelconque des revendications 1 à 3, **caractérisé en ce que** le dispositif de commande (316) est conçu pour, au moyen de l'ensemble d'actionneur (414), activer en cas de besoin l'élément de synchronisation au moins unique (412) associé à l'autre rapport au moins unique si au moins une condition positive est remplie et/ou si au moins une condition négative n'est pas remplie.

**5.** Véhicule comprenant une chaîne cinématique qui présente : une unité d'entraînement (238), une boîte de vitesses (330) commandée en charge avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service,
sachant qu'un ensemble d'actionneur (236; 414) et un dispositif de commande (316) commandant l'ensemble d'actionneur, par l'intermédiaire desquels des rapports de boîte associés au premier et au deuxième arbres d'entrée de boîte peuvent être engagés et désengagés, sont associés à la boîte de vitesses, sachant que le dispositif de commande asservit en outre un dispositif d'actionnement (234) de préférence hydraulique associé ou affecté au dispositif d'embrayage pour actionner les ensembles d'embrayage dans le sens d'embrayage et dans le sens de débrayage,
sachant que le dispositif de commande (316) est conçu pour, dans un mode de passage de rapport en charge, dans un état de la boîte de vitesses dans lequel un rapport initial associé au premier arbre d'entrée de boîte et un rapport cible associé à l'autre arbre d'entrée de boîte sont engagés, actionner les ensembles d'embrayage (204, 206) en sens contraires au moyen du dispositif d'actionnement (234) afin de déplacer un couple d'entraînement de l'unité d'entraînement d'un arbre d'entrée de boîte à l'autre en continu et sans interruption de la force de traction et ainsi de désactiver le rapport initial comme rapport transmetteur de couple et d'activer le rapport cible comme rapport transmetteur de couple,
**caractérisé en ce qu'**il est prévu un mode de synchronisation actif dans lequel, en vue de la désactivation du rapport initial comme rapport transmetteur de couple et de l'activation du rapport cible comme rapport transmetteur de couple, le rapport initial est d'abord désengagé et/ou l'ensemble d'embrayage associé au rapport initial est d'abord ouvert, puis la vitesse de rotation de l'unité d'entraînement et la vitesse de rotation de l'arbre d'entrée de boîte associé au rapport cible sont amenées au ratio de synchronisation du rapport cible, et enfin le rapport cible est engagé.

**6.** Véhicule selon la revendication 5, **caractérisé en ce que**, dans le mode de synchronisation actif, la vitesse de rotation de l'unité d'entraînement et la vitesse de rotation de l'arbre d'entrée de boîte associé au rapport cible sont amenées conjointement au ratio de synchronisation du rapport cible par le fait que, lorsque la vitesse de rotation de l'unité d'entraînement est amenée au ratio de synchronisation, l'ensemble d'embrayage associé au rapport cible est au moins partiellement embrayé.

**7.** Véhicule selon la revendication 5, **caractérisé en ce que**, dans le mode de synchronisation actif, après avoir amené la vitesse de rotation de l'unité d'entraînement au ratio de synchronisation, la vitesse de rotation de l'arbre d'entrée de boîte associé au rapport cible est amenée au ratio de synchronisation en embrayant au moins partiellement l'ensemble d'embrayage associé au rapport cible.

**8.** Véhicule selon l'une quelconque des revendications 5 à 7, **caractérisé en ce que** le mode de synchronisation active, concernant le passage à un rapport supérieur, n'est autorisé que si une vitesse momentanée du véhicule rapportée au rapport cible est égale ou supérieure à un régime minimal de ralenti de l'unité d'entraînement.

**9.** Véhicule comprenant une chaîne cinématique qui présente: une unité d'entraînement (238), une boîte de vitesses (330) commandée en charge avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service,
sachant qu'un ensemble d'actionneur (236, 414) et un dispositif de commande (316) commandant l'ensemble d'actionneur, par l'intermédiaire desquels des rapports de boîte associés au premier et au deuxième arbres d'entrée de boîte peuvent être engagés et désengagés, sont associés à la boîte de vitesses, sachant que le dispositif de commande asservit en outre un dispositif d'actionnement (234) de préférence hydraulique associé ou affecté au dispositif d'embrayage pour actionner les ensembles d'embrayage dans le sens d'embrayage et dans le sens de débrayage,

sachant que le dispositif de commande (316) est conçu pour, dans un mode de passage de rapport en charge, dans un état de la boîte de vitesses dans lequel un rapport initial associé au premier arbre d'entrée de boîte et un rapport cible associé à l'autre arbre d'entrée de boîte sont engagés, actionner les ensembles d'embrayage (204, 206) en sens contraires au moyen du dispositif d'actionnement (234) afin de déplacer un couple d'entraînement de l'unité d'entraînement d'un arbre d'entrée de boîte à l'autre en continu et sans interruption de la force de traction et ainsi de désactiver le rapport initial comme rapport transmetteur de couple et d'activer le rapport cible comme rapport transmetteur de couple,

**caractérisé en ce que** le dispositif de commande (316) est conçu pour, lors du passage d'un rapport initial supérieur à un rapport cible inférieur, donc lors d'une rétrogradation, en préparation d'un engagement du rapport cible, agir sur l'unité d'entraînement de telle sorte que le couple d'entraînement de celle-ci augmente au-delà d'un couple pouvant être transmis par l'ensemble d'embrayage associé au rapport initial, de sorte que la vitesse de rotation de l'unité d'entraînement augmente au-delà de la vitesse de rotation momentanée de l'arbre d'entrée de boîte associé au rapport initial et au moins s'approche d'une vitesse de rotation synchrone pour le rapport cible qui est dépendante de la vitesse momentanée du véhicule, et de préférence atteint au moins approximativement cette vitesse de rotation, et **en ce que** le dispositif de commande (316) est conçu pour, au cours de l'augmentation du couple d'entraînement ou encore de l'accélération de l'arbre d'entrée de boîte associé au rapport cible ou ensuite, commander l'ensemble d'actionneur (236 ; 414) de telle sorte que ce dernier agit sur la boîte de vitesses au sens d'un engagement du rapport cible.

10. Véhicule selon la revendication 9, **caractérisé en ce que** le dispositif de commande (316) est conçu pour, en même temps que l'augmentation du couple d'entraînement ou ensuite, actionner l'ensemble d'embrayage associé au rapport cible dans le sens d'embrayage afin d'accélérer l'arbre d'entrée de boîte associé au rapport cible dans le sens d'un rapprochement de la vitesse de rotation synchrone, et de préférence l'amener au moins approximativement à la vitesse de rotation synchrone.

11. Véhicule comprenant une chaîne cinématique qui présente : une unité d'entraînement (238), une boîte de vitesses (330) commandée en charge avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,

sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service,

sachant qu'un ensemble d'actionneur (236 ; 414) et un dispositif de commande (316) commandant l'ensemble d'actionneur, par l'intermédiaire desquels des rapports de boîte associés au premier et au deuxième arbres d'entrée de boîte peuvent être engagés et désengagés, sont associés à la boîte de vitesses, sachant que le dispositif de commande asservit en outre un dispositif d'actionnement (234) de préférence hydraulique associé ou affecté au dispositif d'embrayage pour actionner les ensembles d'embrayage dans le sens d'embrayage et dans le sens de débrayage,

sachant que le dispositif de commande (316) est conçu pour, dans un mode de passage de rapport en charge, dans un état de la boîte de vitesses dans lequel un rapport initial associé au premier arbre d'entrée de boîte et un rapport cible associé à l'autre arbre d'entrée de boîte sont engagés, actionner les ensembles d'embrayage (204, 206) en sens contraires au moyen du dispositif d'actionnement (234) afin de déplacer un couple d'entraînement de l'unité d'entraînement d'un arbre d'entrée de boîte à l'autre en continu et sans interruption de la force de traction et ainsi de désactiver le rapport initial comme rapport transmetteur de couple et d'activer le rapport cible comme rapport transmetteur de couple,

et sachant que le dispositif de commande (316) est conçu pour, lors du passage d'un rapport initial inférieur à un rapport cible supérieur, donc lors d'une montée de rapport, en préparation d'un engagement du rapport cible, actionner l'ensemble d'embrayage associé au rapport cible dans le sens d'embrayage à partir d'un état débrayé suffisamment pour que l'arbre d'entrée de boîte associé au rapport cible - arbre qui jusqu'alors, du fait de l'action de couples de glissement de boîte et/ou de couples de freinage, tourne au plus à une vitesse de rotation inférieure à la vitesse de synchronisation pour le rapport cible - soit accéléré dans le sens d'un rapprochement de la vitesse de synchronisation et de préférence atteigne au moins approximativement celle-ci,

**caractérisé en ce que** le dispositif de commande (316) évalue une température effective du liquide de service - qui est détectée par un ensemble de capteur et/ou déterminée par le dispositif de commande - et, en fonction de cette évaluation, débloque ou bloque un fonctionnement normal de passage de rapports et d'embrayage, avec libre choix des rapports et/ou passage des rapports sans interruption de la force de traction.

**12.** Véhicule selon la revendication 11, **caractérisé en ce que** le dispositif de commande (316) est conçu pour, au cours de l'accélération de l'arbre d'entrée de boîte associé au rapport cible ou ensuite, commander l'ensemble d'actionneur (236 ; 414) de telle sorte que ce dernier, en vue de la préparation de l'actionnement en sens contraires des ensembles d'embrayage, agit sur la boîte de vitesses au sens d'un engagement du rapport cible.

**13.** Véhicule selon la revendication 11, **caractérisé en ce que** le dispositif de commande (316) débloque le fonctionnement normal de passage de rapports et d'embrayage si la température effective dépasse une valeur de seuil ou si une viscosité du liquide de service - déterminée à partir de la température effective - est tombée sous une valeur de seuil.

**14.** Véhicule selon la revendication 13 ou 14, **caractérisé en ce que** le dispositif de commande (316) est conçu pour déterminer la température effective du liquide de service à partir d'au moins une valeur de température qui est déterminée au moyen d'un ensemble de capteur et qui n'indique pas directement la température effective du liquide de service, et/ou à partir d'au moins un paramètre de service de la chaîne cinématique, sachant que la détermination peut éventuellement se baser sur plusieurs valeurs de température ou paramètres de service consigné (e)s à différents instants, et/ou sur un modèle de température défini par exemple mathématiquement et/ou par des diagrammes caractéristiques.

## Fig.1

a)

b)

# Fig.2

ECU

Fig. 3

Fig. 4

M
Schlepp

Schleppmoment bei nicht klebenden
Lamellen

Δn

Fig. 5a)

M
Schlepp

Schleppmoment mit Losbrechen
von zusammenklebenden Lamellen

M
Losbrech

Δn

Fig. 5 b)

A  B  C  D    E  F    G  H  C  B  A

Fig.6

Fig. 7

# Schaltablauf: Zug-Rück-Schaltung

Gangstufe 2 einlegen

Gangstufe 1 ausgelegt

Motordrehzahl

Getriebeeingang2

$N_{MO}$

$N_{G2}$

$N_{G1}$

Getriebeeingang 1

Eingangsdrehzahl [1/min]

t

$M_{MO}$

$M_{K2}$

$M_{K2}$

$M_{K1}$ , $M_{K2}$

Kupplung 1

max. Kupplungsmoment

Motor $M_{MO}$

$M_{MO}$

$M_{K1}$

$M_{K1}$

$M_{MO}$

$M_{K2}$

$M_{K1}$

$M_{K2}$

Kupplung 2

Momente [Nm]

t

Längsbeschleunigung [g]

t

① ② ③ ④ ⑤

Schaltphase

# Fig.8

31

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10004179 A1
- DE 19939819 C
- US 5407401 A
- DE 10128856
- DE 19950696 A1

**In der Beschreibung aufgeführte Nicht-Patentliteratur**

- **N. HOLZER ; D. FREY.** Schleppmomente an nasslaufenden Lamellenbremsen. *VDI BERICHTE,* vol. 1323, 469-489